# EUROPÄISCHE PATENTSCHRIFT

(11) **EP 3 669 127 B1**
(45) Veröffentlichungstag und Bekanntmachung des Hinweises auf die Patenterteilung: **04.09.2024**
(21) Anmeldenummer: 18759076.5
(22) Anmeldetag: 17.08.2018
(51) Int. Cl.: F24F 13/22, F24F 5/00, F24D 3/14, F28F 3/00

(54) **WÄRMETAUSCHERELEMENT UND VERFAHREN ZU DESSEN HERSTELLUNG**
HEAT EXCHANGE ELEMENT AND METHOD OF MANUFACTURING THEREOF
ÉLÉMENT D'ÉCHANGE DE CHALEUR ET PROCÉDÉ DE FABRICATION DUDIT

(30) Priorität: 18.08.2017 DE 102017118977; 17.04.2018 DE 202018102124 U
(43) Veröffentlichungstag der Anmeldung: 24.06.2020
(73) Patentinhaber: Buff, Ullrich, 07613 Crossen an der Elster (DE)
(72) Erfinder: Buff, Ullrich, 07613 Crossen an der Elster (DE)
(74) Vertreter: HGF
(86) Internationale Anmeldenummer: PCT/EP2018/072362
(87) Internationale Veröffentlichungsnummer: WO 2019/034789

(56) Entgegenhaltungen:
- EP-A1- 3 029 387
- EP-A1- 3 109 559
- WO-A1-2007/139370
- DE-A1- 10 214 181
- DE-A1- 102012 014 827
- DE-A1- 102014 014 828
- DE-A1- 3 941 618
- DE-A1- 4 216 136
- DE-B3- 102010 018 162
- DE-U1- 202008 013 961
- DE-U1- 202010 010 564
- JP-A- 2009 300 051

## Beschreibung

Die vorliegende Erfindung betrifft ein Wärmetauscherelement und ein Verfahren zu dessen Herstellung.

Zur Temperierung, das heißt Heizung und Kühlung, von Gebäuden ist es bekannt, Wärmetauscherelemente zu verwenden, die beispielsweise als Deckenpaneele oder Wandpaneele ausgebildet und vormontiert sind. Dabei sind oft Kupferrohre mäanderförmig, in langen parallelen Abschnitten mit kurzen endseitigen Umkehr-/Verbinderabschnitten an Wärmeleitblechen verlegt.

Grundlegende Problemstellung ist die kosten- und materialoptimierte Verteilung oder Ableitung von Wärme auf bzw. von einer großen Fläche. Damit soll erreicht werden, dass aus einer Flüssigkeit, z.B. Wasser als effizientem Wärmeträgermedium, eine möglichst große Fläche gleichmäßig und mit hoher Wärmezu- oder -abfuhrleistung betrieben werden kann und gleichzeitig der Materialverbrauch und das Gewicht minimiert ist. Der Wärmeaustausch kann dabei über Wärmestrahlung, Konvektion oder Wärmeleitung erfolgen.

Bisherige Systeme verwenden hierzu Wärmeleitbleche aus metallischen Werkstoffen, z.B. Stahl oder Aluminium, die um den relativ großen Rohrquerschnitt von bis zu 20 mm, eingeclipst werden. Die Konstruktion wird insbesondere in Verbundelementen von Kühldecken-, bzw. Heizdeckenkonstruktionen verwendet. Diese nutzen den Wärmestrahlungsaustausch für die Erbringung einer hohen Kühl-, oder Heizleistung. Dafür ist eine besonders gleichmäßig und effektiv temperierte Fläche mit einem hohen Wärmeübertragungskoeffizienten erwünscht. Um das zu erreichen werden Metallbleche in einem Vorfertigungsprozess auf das nötige Maß bzw. den gewünschten Querschnitt gebracht. Dazu werden nachgeformte oder extrudierte Profile mit einer Wandstärke von etwa 1 mm oder mehr verwendet. Anschließend werden in diese die Rohre eingezogen, welche über die Wandung Wärme an das Kunststoffrohr abgeben. Die Wärmeleitbleche, welche an das Kupferrohr angepasst sind, haben üblicherweise Dicken von etwa 1 bis 3 mm. Dies ist bedingt durch den relativ großen Rohrabstand und die damit einhergehende nötige Wärmeleitung in einem festen Medium.

Ein Problem dieser Systeme ist der hohe Materialverbrauch, das hohe Gewicht und die relativ ungleichmäßige flächige Wärmeverteilung, welche sich durch eine Welligkeit im Temperaturprofil abzeichnet. In Wärmebildern solcher Elemente sind die einzelnen Streifen der Metalllamellen sichtbar. Diese weisen im Randbereich eine ungenügende Gleichmäßigkeit und Wärmeverteilung auf.

Feuchtelasten werden in Gebäuden durch luftbasierte Verfahren, in der Regel durch die Abkühlung auf gekühlten Wärmeleitlamellen und die folgende Kondensatabführung erreicht. Durch eine Abkühlung der relativ großen Oberfläche von Wärmleitlamellen wird der Taupunkt der Luft unterschritten und es läuft Kondensat an den Lamellen ab. Nachteil dieses Verfahrens ist, dass die Luft nichtvermeidbare Anteile an Schad- und Nährstoffen für eine Keimbildung auf den Wärmeleitlammelen transportiert. Diese schlagen sich auf den Lamellen nieder und führen im Falle einer unzureichenden Wartung zu erheblichen Gesundheitsbelastungen für die im klimatisierten Bereich befindlichen Personen. Zusätzlich ist durch die nötige Luftbewegung ein Ab- und Zuluftsystem erforderlich, was oft mit hohen Stromkosten verbunden ist. Dezentrale und alleinstehende Systeme für einzelne Räume haben oft einen hohen Energieverbrauch und Heizen den Raum, durch die Entfeuchtung, zusätzlich auf.

In der DE 102005034141 A1 ist ein Verfahren beschrieben, bei dem ein Springbrunnen benutzt wird, dessen Flüssigkeitstemperatur unter dem Taupunkt des Wasserdampfes in der Luft liegt. Der Wasserdampf kondensiert somit an der Wasseroberfläche. Das gekühlte Wasser läuft möglichst über eine breite Fläche ab. Nachteil dieses Brunnens ist zum einen die Auffälligkeit, die durch das herablaufende Wasser nur verstärkt wird. Außerdem ist der Wartungsaufwand durch das offene Kühlsystem hoch. Das Wasser muss regelmäßig getauscht werden, ansonsten können sich leicht Algen bilden. Der Einsatz von Chlor, Alkohol oder anderen Antialgenmitteln kann sich wiederrum negativ auf das Raumklima auswirken.

Weiterhin gibt es noch Luftentfeuchter, die ein Mittel enthalten, die Wasserdampf absorbieren, beziehungsweise adsorbieren. Die Leistung ist jedoch sehr beschränkt und diese "chemischen" Luftentfeuchter können nur in einem lokal begrenzten Gebiet eingesetzt werden. Des Weiteren muss der Absorbent oder Adsorbent regelmäßig ausgetauscht werden und/oder regeneriert werden, was wiederum den Aufwand und die Kosten erhöht.

Aus der EP 3 109 559 A1 geht ein Verfahren und ein System zur Einrichtung einer Gebäuderaumklimatisierung hervor. Dieses System weist eine Trägerplatte auf, auf dem mäanderförmig ein Rohrsystem angeordnet ist, das mittels Wärmeleitblechen befestigt ist. Die Wärmeleitbleche sind aus Metallstreifen ausgebildet und an die Trägerplatte geklebt.

Die DE 10 2012 014 827 A1 zeigt ein ähnliches Flächenwärmetauscherelement, welches für Kühldeckenkonstruktionen vorgesehen ist, bei dem wiederum ein Rohrleitungssystem auf eine Trägerplatte mittels Wärmeübertragungselementen festgelegt werden kann, wobei die Wärmeübertragungselemente aus Wärmeleitfolie oder Wärmeleitblechen ausgebildet sind.

Die DE 20 2008 013 961 U1 zeigt ein Kühldeckenelement für abgehängte Gebäuderaumdecken mit Kühlrohren, welche in einer Wärmedämmschicht aus EPS in Aufnahmenuten eingebettet sind. Die Kühlrohre sind schlangenlinienförmig verlegt.

Aus der DE 10 2010 018 162 B3 geht ein Verfahren zur Herstellung eines Flächenwärmetauscherelementes hervor, bei welchem eine Rohrleitung mäanderförmig in Nuten eines Formkörpers angeordnet werden. Die Rohrleitung besteht vorzugsweise aus Kupferrohren. Die Rohrleitung kann jedoch auch aus Edelstahl oder Aluminium ausgebildet sein. Es können sogar Kunststoffrohre verwendet werden, insbesondere wenn sie mit einem Inliner aus Metall versehen sind. Ein solches Rohr hat einen Durchmesser von beispielsweise 12 mm.

In der DE 20 2010 010 564 U1 ist ein Heiz- oder Kühlelement beschrieben, das ein plattenförmiges Deckenelement aufweist, auf dessen Rückseite eine Rohrleitung mittels eines Wärmeleitprofils angebracht ist. Das Wärmeleitprofil ist auf dem Deckenelement aufgeklebt.

In der WO 2007/139370 A1 ist ein Kühlsystem zum Zirkulieren von Wasser beschrieben, das spiralförmig angeordnete Schlauchleitungen aufweist, durch welche das Wasser geführt wird. Die Schlauchleitungen können aus einem Kunststoff ausgebildet sein.

In der DE 39 41 618 A1 ist eine Vorrichtung zum Kühlen oder Heizen eines Raumes beschrieben, wobei rohrförmige Leitungsstränge zwischen einer durchgehenden Deckplatte und einer Andrückeinrichtung geklemmt werden. Die Andrückeinrichtung besteht beispielsweise aus Druckleisten. Die Leitungsstränge können in einer wärmeleitenden Kontaktmasse eingebettet sein. Die Leitungsstränge sind aus einem flexiblen Material ausgebildet. Sie besitzen beispielsweise einen Außendurchmesser von etwa 2 - 6 mm und werden mit Abständen von etwa 10 - 20 mm angeordnet. Durch den geringen Abstand soll eine gleichmäßige Temperaturverteilung an der Deckplatte erzielt werden.

In der DE 42 16 136 A1 ist eine Kühldecke beschrieben, welche aus einem Deckenpaneel, Kühl- und/oder Heizrohren und Öffnungen zwischen dem Gebäuderaum und dem Deckenhohlraum aufweist. Die Rohre sind so angeordnet, dass sie von der Innenraumluft frei umspült werden können. Die Kühlrohre sind aus Aluminiumpressteilen ausgebildet. Schwitzwasser, das an dem Kühlraum kondensiert, kann über das jeweilige Paneel aufgefangen und abgeführt werden.

Aus der JP 2009-300051 A geht ein Wärmetauscher zur Montage an einer Gebäudedecke hervor, welcher aus zwei Segmenten besteht, die mittig verbunden sind. Die Mitte ist etwas abgesenkt gegenüber dem übrigen Bereich. Es sind Drainageelemente vorgesehen, die Kondenswasser aufsammeln und zur Mitte ableiten.

Aus der EP 3 029 387 A1 geht ein selbstreinigender Befeuchtungsapparat hervor.

Die DE 10214181 A1 betrifft ein Verfahren, eine Vorrichtung und eine Schaltungsanordnung zur Klimatisierung von Räumen. Die Vorrichtung umfasst zumindest eine als Wärmetauscher wirkende Kapillarrohrmatte, durch die eine Heiz- oder Kühlflüssigkeit zirkuliert wird. Jede Kapillarrohrmatte ist an eine eigene Flüssigkeitsversorgung angeschlossen. Der Druck in der Heiz- oder Kühlflüssigkeit liegt bei 3 bar bis 6 bar. Aus der DE 102014014828 A1 geht eine Kunststoffrohrmatte zur Kühlung, Heizung und/oder zum Wärmeaustausch in Gebäuden mit magnetisch wirkenden Elementen hervor. Mittels der magnetischen Elemente kann die Kunststoffrohrmatte beispielsweise einfach an Moniereisen in einer Betondecke fixiert werden.

Eine Aufgabe der Erfindung besteht darin, ein Wärmetauscherelement zu schaffen, welches mit wenig Material und konventionellen Werkstoffen eine gleichmäßigere Oberflächentemperatur und bei möglichst einfacher, skalierbarer Verarbeitung bzw. Produktion eine hohe Wärmeübertragung erreicht.

Eine weitere Aufgabe liegt in der Schaffung eines vorteilhaften Herstellungsverfahrens für ein solches Wärmetauscherelement.

Eine oder mehrere der Aufgaben werden durch den Gegenstand eines der unabhängigen Ansprüche gelöst. Vorteilhafte Weiterbildungen und bevorzugte Ausführungsformen bilden den Gegenstand der jeweiligen Unteransprüche.

Nach einem Gesichtspunkt der Erfindung wird ein Wärmetauscherelement mit einem wärmeleitenden Wärmeleitkörper sowie mit einer Wärmeträgerfluidleitung, die mit dem Wärmeleitkörper wärmeleitend verbunden ist, vorgeschlagen, wobei die Wärmeträgerfluidleitung abschnittweise in vorzugsweise parallel angeordneten Kanälen aus wärmeleitendem Werkstoff in wärmeleitendem Kontakt eingebettet ist, wobei die Kanäle einen rinnenförmigen Aufnahmeabschnitt und zwei an den Aufnahmeabschnitt angebundene Laschen aufweisen, so dass die Kanäle im Querschnitt etwa Ω-förmig ausgebildet sind, und wobei die Laschen flächig mit dem Wärmeleitkörper verbunden sind, um die wärmeleitende Verbindung der Wärmeträgerfluidleitung mit dem Wärmeleitkörper herzustellen.

Die im Querschnitt etwa Ω-förmig ausgebildeten Kanäle können Wärme über die gesamte Innenfläche des Aufnahmeabschnitts mit der Wärmeträgerfluidleitung austauschen und über die Laschen mit dem Wärmeleitkörper austauschen. Hierdurch kann auch ein besserer Wärmeübergang bewirkt werden.

Erfindungsgemäß ist der Wärmeleitkörper als flexible Folie gebildet.

Das Wärmetauscherelement kann bei Verwendung flexibler Wärmeträgerfluidleitungen daher insgesamt flexibel und vor allem rollbar ausgebildet sein.

In Ausführungsformen weist der Wärmeleitkörper eine Wärmeübergangsfläche, die eine Hauptfläche der flexiblen Folie ist und zum Wärmeaustausch mit einer Umgebung ausgebildet ist, und eine Montagefläche, die eine Hauptfläche der flexiblen Folie ist, auf, wobei die Laschen mit der Montagefläche verbunden sind, wobei die Montagefläche vorzugsweise von der Wärmeübergangsfläche weg weist. Wie oben bereits beschrieben, ist eine Hauptfläche im Sinne der Erfindung eine der beiden größten Flächen der flexiblen Folie, d.h., ist insbesondere verschieden von dessen Randfläche. In dieser Ausgestaltung wird auch eine vorteilhafte Funktionsgliederung erzielt, auch kann die Wärmeübergangsfläche von Wärmeträgerleitungen frei gehalten werden, was die Gestaltung der Wärmeübergangsfläche, die einer Umgebung, beispielsweise einem Wohnraum, zugewandt sein kann, erleichtert.

In Ausführungsformen ist die Wärmeträgerfluidleitung mäanderförmig entlang der Montagefläche angeordnet. In den Aufnahmeabschnitten der Kanäle eingebettete Abschnitte der Wärmeträgerfluidleitung können gerade, vorzugsweise parallel zueinander und vorzugsweise einstückig miteinander verbunden sein. Mit einer mäanderförmigen Anordnung kann auch eine gute Flächennutzung erzielt werden. Wenn die eingebetteten Abschnitte parallel zueinander sind, sind nur kurze Umkehr- bzw. Verbinderabschnitte erforderlich, die nicht eingebettet sind, womit der Wärmeübergang über die weitaus längeren eingebetteten Abschnitte sichergestellt ist. Bei einer einstückigen Verbindung der eingebetteten Abschnitte kann eine gute Dichtigkeit und damit Betriebssicherheit geschaffen werden. Auch kann die einstückige Wärmeträgerfluidleitung beispielsweise als Rohrmatte oder dergleichen vorbereitet sein, was die Herstellung des Wärmetauscherelements erleichtert. Als Alternative zur einstückigen Verbindung können auch Verbinderstücke vorgesehen sein, die beispielsweise stoffschlüssig oder auf Pressung mit den eingebetteten Abschnitten dicht verbunden sind.

Erfindungsgemäß ist die Wärmeträgerfluidleitung aus Kunststoff hergestellt. Dies ist eine bewährte und kostengünstige Ausführung. Auch ist Kunststoff gut formbar, was die Herstellung einer endlosen mäanderförmigen Wärmeträgerfluidleitung mit ggf. engen Umkehrabschnitten erleichtert.

Beispiele für geeignete Kunststoffe sind Polyvinylchlorid (PVC), Polyethylen (PE), Polypropylen (PP), vernetztes Polyethylen (PEX) sowie vielfältige Arten von Kunststoff-Verbundstoffen.

In Ausführungsformen ist eine Innenkontur der Kanäle an eine Außenkontur der Wärmeträgerfluidleitung angepasst und ist eine Mündungsweite der Kanäle im Querschnitt kleiner als eine Außenabmessung der Wärmeträgerfluidleitung im Querschnitt. Damit ist die Wärmeträgerfluidleitung in die Kanäle einclipsbar, was auch eine leichte Montage ermöglicht. Da die Leitungen durch die Eigenspannung der Kanäle elastisch in die Aufnahmeabschnitte hinein, mithin von dem Plattenbauteil weg gedrängt werden und nicht durch ihre Eigenspannung und -elastizität gegen der Wärmeleitkörper drücken und die Verbindung zwischen dem Wärmeleitkörper und den Kanälen belasten können, ist die Montage auch besonders betriebssicher.

In Ausführungsformen sind die Laschen der Kanäle über einen wärmeleitenden Klebstoff oder ein wärmeleitendes Haftmittel mit dem Wärmeleitkörper verbunden. Dadurch kann der Wärmeübergang weiter verbessert werden.

Die Kanäle können durch Pressfügen oder umformendes Fügen mit dem Wärmeleitkörper verbunden werden. Damit kann auch ein noch direkterer Wärmeübergang erzielt werden, auch kann ein Klebstoff oder Haftmittel vermieden oder in ihrer Wirkung unterstützt werden.

In Ausführungsformen sind die Kanäle, insbesondere die Aufnahmeabschnitte der Kanäle, in einem Trägerbauteil mit Nuten, die an eine Außenkontur der Kanäle angepasst sind, eingebettet. Mit einem solchen Trägerbauteil kann auch eine bessere Eigenstabilität des Wärmetauscherelements bewirkt werden.

Das Trägerbauteil ist vorzugsweise eine Dämmplatte. Mit einer Dämmplatte als Trägerbauteil ist auch eine Wärmeisolation auf der "Rückseite", also der Montagefläche, des Wärmeleitkörpers möglich, was die Nutzbarkeit in der Gebäudeklimatisierung verbessert. Die Dämmplatte kann auch diffusionsdicht oder diffusionsoffen gestaltet sein, je nach Anwendung bzw. Einsatz. Beispiele sind etwa PUR-Dämmplatten oder Mineralwollplatten. Dadurch wird die Wirkung in eine Richtung angestrebt, was insbesondere in der Gebäudeklimatisierung vorteilhaft sein kann.

Eine solche Dämmplatte weist vorzugsweise eine Wärmeleitfähigkeit von maximal 1,0 W/mK und insbesondere von maximal 0,4 W/mK.

Durch das Vorsehen einer Dämmplatte weist das Wärmetauscherelement nur an einer Seite einen Wärmeübergang auf, so dass man dieses Wärmetauscherelement auch als einseitig aktivierbares Wärmetauscherelement bezeichnen kann. Durch die einseitige Aktivierung eignet sich das Wärmetauscherelement zur Anordnung an thermisch passiven oder nicht temperierten Oberflächen mit der thermisch nicht aktivierten Seite, wie z.B. Hauswänden. Zweck eines flächigen Wärmetauscherelements ist auch, wie bereits beschrieben, Wärme mit möglichst geringem Material und Ressourceneinsatz auf oder von großen Oberflächen zu verteilen bzw. aufzunehmen.

In Ausführungsformen weisen die Kanäle eine Wandstärke von wenigstens etwa 10 µm und von höchstens etwa 100 µm, vorzugsweise wenigstens etwa 15 µm und höchstens etwa 50 µm auf. Durch diese Bauweise weist das Wärmetauscherelement auch ein besonders geringes Gewicht auf. Die Kanäle sind aus Folie herstellbar, was einen geringen Aufwand und wenig Energie erfordert.

In alternativen Ausführungsformen weisen die Kanäle eine Wandstärke von wenigstens etwa 0,5 mm und von vorzugsweise wenigstens etwa 0,8 auf. Die Wandstärke beträgt höchstens etwa 5 mm und vorzugsweise höchstens etwa 2 mm, insbesondere höchstens etwa 1 mm. Bei dieser Bauweise weist das Wärmetauscherelement eine hohe Eigenstabilität und Wärmeleitung auf. Die Kanäle können beispielsweise aus einem stranggepressten Aluminiumprofil hergestellt werden. Ein solches Profil könnte bei Massenproduktion wirtschaftlich herstellbar sein und hätte dann den Vorteil, dass es aufgrund seiner größeren Wandstärken im Vergleich zur Aluminiumfolie besser Wärme leitet.

Erfindungsgemäß weist der Wärmeleitkörper eine Wandstärke von wenigstens etwa 10 µm und vorzugsweise wenigstens etwa 15 µm. Der Wärmeleitkörper kann eine Wandstärke von höchstens etwa 100 µm und insbesondere höchstens etwa 50 µm aufweisen. Durch diese Bauweise weist das Wärmetauscherelement auch ein besonders geringes Gewicht auf. Erfindungsgemäß ist der Wärmeleitkörper als flexible Folie ausgebildet, was einen geringen Aufwand und wenig Energie erfordert.

Der Wärmeleitkörper kann auf der Wärmeübergangsfläche eine wärmeemissionsoptimierte und/oder wärmeabsorptionsoptimierte Beschichtung aufweisen. Damit kann der Wärmeübergang weiter verbessert werden. Die Beschichtung kann beispielsweise als Farbe, Vlies, Beflockung, oder auf elektrochemische Weise aufgebracht sein.

Vorzugsweise weist der der Wärmeleitkörper eine Perforation oder Aufrauung auf.

Eine solche Ausbildung kann Vorteile hinsichtlich Akustik, Einputzen oder thermischem sowie Haftverhalten aufweisen.

Der Wärmeleitkörper kann auf der Wärmeübergangsfläche eine Beschichtung mit einem ad- oder absorptiven Material aufweisen. Damit ist auch eine Nutzung der Wärme oder Kälte für kostengünstige, z.B. wärmegetriebene Kältemaschinen möglich. Ein solches ad- oder absorptives Material kann beispielsweise Zeolith oder Silicagel sein. Eine solche Ausführungsform kann insbesondere für die Anwendung in kostengünstigen, solar- oder wärmegetriebenen Absorptionskältemaschinen auf Zeolithbasis vorteilhaft sein.

In Ausführungsformen weist der Wärmeleitkörper auf der Wärmeübergangsfläche eine Beschichtung zum Schutz gegen physikalische oder chemische Umwelteinflüsse auf, was zusätzliche Vorteile hinsichtlich der Betriebssicherheit und der Handhabung und Montage aufweisen kann.

Die Beschichtung kann auch akustische Eigenschaften und insbesondere Schall dämmende Eigenschaften aufweisen. Eine solche Beschichtung kann bspw. ein Textil, Vlies, Gewebe, Gewirk, elastisches Gitter oder eine gelochte insbesondere mikroperforierte Platte aus einem gut wärmeleitenden Material sein. Das Wärmetauscherelement kann dann gleichzeitig zum Temperieren eines Raumes als auch zum Einstellen der Akustik des Raumes verwendet werden.

Eine solche akustische Eigenschaften aufweisende Beschichtung ist insbesondere in Verbindung mit einem flexiblen und vor allem rollbaren Wärmetauscherelement von Vorteil.

Der Wärmeleitkörper kann wenigstens teilweise durchlässig für Luft oder Gas oder Feuchtigkeit sein. Eine solche Durchlässigkeit kann beispielsweise durch eine gitterartige oder wabenartige oder gelochte oder perforierte Struktur des Wärmeleitkörpers hervorgebracht werden. Damit ist auch ein konvektiver Wärmeübergang durch den Wärmeleitkörper hindurch möglich und damit auch beispielsweise eine Hinterlüftung des Wärmetauscherelements.

Der Wärmeleitkörper ist aus Aluminium oder Kupfer oder einer Legierung oder einer Materialzusammensetzung damit als flexible Folie ausgebildet. Die Kanäle können aus Aluminium oder Kupfer oder einer Legierung oder einer Materialzusammensetzung damit ausgebildet sein. Diese Materialien weisen bekanntlich eine besonders gute Wärmeleitfähigkeit auf, was den Wärmeübergang weiter verbessert.

Gemäß einem weiteren Gesichtspunkt der Erfindung wird ein Verfahren zum Herstellen eines Wärmetauscherelements mit einem wärmeleitenden Wärmeleitkörper, welches eine Wärmeübergangsfläche aufweist, und einer Wärmeträgerfluidleitung, die mit dem Wärmeleitkörper wärmeleitend verbunden ist, vorgeschlagen. Das Wärmetauscherelement kann gemäß der vorstehenden Beschreibung ausgebildet sein. Erfindungsgemäß weist das Verfahren folgende Schritte auf:
- Anordnen einer wärmeleitenden Folie auf einer Nuten aufweisenden Schablone derart, dass die Nuten durch die Folie abgedeckt sind;
- Verwenden von Folienstreifen, mit welchen jeweils eine Nut abgedeckt wird, als die Folie, oder Ausbilden von Folienstreifen, welche jeweils eine Nut abdecken, aus der Folie;
- Eindrücken der Folienstreifen in die jeweilige Nut, wobei die Folienstreifen so breit sind, dass sie nach dem Eindrücken jeweils einen rinnenförmig in die Nuten eingedrückten Abschnitt sowie seitlich an den Längsrändern der Nuten vorstehende Laschen ausbilden;
- Einsetzen von Abschnitten einer Wärmeträgerfluidleitung in die in den Nuten eingedrückten rinnenförmigen Abschnitte der Folienstreifen; und
- Verbinden der Laschen flächig mit dem wärmeleitenden Wärmeleitkörper, wobei die Folienstreifen beim Eindrücken in die Nuten ausgebildet werden, indem die Folie an vordefinierten Stellen längs zwischen den Nuten reißt, wobei die vordefinierten Stellen vorzugsweise durch eine Schwächung, insbesondere Perforation, verwirklicht sind, die vor Anordnen der Folie auf der Schablone in der Folie hergestellt wird, oder die Folienstreifen in der auf der Schablone angeordneten Folie durch ein Schneidwerkzeug, das vorzugsweise in einem Presswerkzeug zum Eindrücken der Folienstreifen in die Nuten integriert ist, ausgebildet werden.

Vorzugsweise ist die wärmeleitende Folie mit einer Schicht aus wärmeleitendem Klebstoff beschichtet. Andere materialverbindende Verfahren, insbesondere solche, die wärmeleitend sind, wie z.B. Löt- oder Schweißverbindungen o.ä., heiß, kalt, umform oder dauerhaft materialverbindende Verfahren, können auch eingesetzt werden. Damit ist ein einfaches und kostengünstiges Verfahren zur Herstellung eines Wärmetauscherelements bereitgestellt. Da durch das Verfahren ein Wärmetauscherelement mit den Merkmalen gemäß dem vorstehenden Erfindungsgesichtspunkt hergestellt wird, sind die im Zusammenhang mit dem vorstehenden Erfindungsgesichtspunkt und seinen Ausführungsformen genannten Merkmale und Vorteile direkt oder entsprechend auch dem Verfahren dieses Erfindungsgesichtspunkts zuzuschreiben.

In weiteren alternativen Ausführungsformen werden die vorab vorbereiteten Folienstreifen auf der Schablone, jeweils eine Nut abdeckend, abgelegt.

Die Folie oder die vorab vorbereiteten Folienstreifen können durch ein Presswerkzeug zum Eindrücken der Folienstreifen in die Nuten aufgenommen und auf der Schablone angeordnet und dann in einem Zug in die Nuten eingedrückt werden. Die Aufnahme der Folie oder Folienstreifen kann beispielsweise durch eine Ansaugvorrichtung im Presswerkzeug oder Haftmittel am Presswerkzeug bewirkt werden. Mit dieser Prozessführung ist auch eine Kombination der Werkzeugfunktionen möglich.

Eine exakte Positionierung der Folie oder Folienstreifen gegenüber dem Presswerkzeug und der Schablone ist automatisch gegeben und muss nicht gesondert sichergestellt werden. Damit können auch der Herstellungsprozess weiter vereinfacht, die Taktzahl erhöht und die Gesamtkosten verringert werden.

Vorzugsweise werden die Laschen der Kanäle über einen wärmeleitenden Klebstoff oder ein wärmeleitendes Haftmittel mit dem Wärmeleitkörper verbunden. Vorteilhafterweise kann der Klebstoff oder das Haftmittel vorab auf dem Wärmeleitkörper aufgetragen werden.

Die Kanäle können durch Pressfügen oder umformendes Fügen mit dem Wärmeleitkörper verbunden werden.

Die Schablone kann aus einem elastisch nachgiebigen Material hergestellt sein, wobei eine Öffnungsbreite der in den Nuten eingedrückten, rinnenförmigen Abschnitte der Folienstreifen kleiner als ein Außendurchmesser der Wärmeträgerfluidleitung ist. Mit dieser Art der Herstellung können sich rinnenförmige Abschnitte der Folienstreifen durch den Gegendruck des Schablonenmaterials elastisch an die Leitungsabschnitte anschmiegen. Dadurch kann auch ein besonders guter Wärmeübergang erzielt werden. Wenn die Einführungsöffnung nach dem Eindrücken der Wärmeträgerfluidleitung zurückfedert, kann die Wärmeträgerfluidleitung verliersicher in der Rinne gehalten werden.

In Ausführungsformen ist die Schablone aus einem Wärme und/oder Schall dämmenden Material hergestellt und verbleibt als Dämmplatte an dem Wärmetauscherelement, wobei die wärmeleitende Folie vor dem Anordnen auf der Schablone mit einem Klebstoff oder einem Haftmittel auf einer zu der Schablone weisenden Fläche versehen wird, der oder das nach dem Eindrücken der Folienstreifen in die jeweilige Nut eine Verbindung mit der Schablone herstellt. Damit kann auf besonders einfache Weise eine Wärmeträgerfluidleitung mit Dämmplatte als Trägerbauteil hergestellt werden.

Der Wärmeleitkörper kann eine Wärmeübergangsfläche, die eine Hauptfläche des Wärmeleitkörpers ist und zum Wärmeaustausch mit einer Umgebung ausgebildet ist, und eine Montagefläche, die eine Hauptfläche des Wärmeleitkörpers ist, aufweisen, wobei die Laschen mit der Montagefläche verbunden werden, wobei die Montagefläche vorzugsweise von der Wärmeübergangsfläche weg weist. Zusätzlich zu den Vorzügen, die hinsichtlich des Wärmetauscherelements bereits genannt wurden, weist diese Prozessführung auch hinsichtlich des Verfahrens den Vorteil auf, dass der Wärmeleitkörper bei Verbindung mit den Laschen an der Schablone verbleiben kann.

Vorzugsweise wird der Wärmeleitkörper auf der Wärmeübergangsfläche mit einer Beschichtung versehen. Die Beschichtung kann wärmeemissionsoptimiert und/oder wärmeabsorptionsoptimiert und/oder zum Schutz gegen physikalische oder chemische Umwelteinflüsse ausgelegt sein und/oder ad- oder absorptive Eigenschaften aufweisen.

In Ausführungsformen weist der Wärmeleitkörper eine Perforation oder Aufrauhung auf oder wird mit einer solchen versehen, und/oder ist teilweise durchlässig für Luft oder Gas oder Feuchtigkeit, vorzugsweise durch eine gitterartige oder gelochte oder perforierte Struktur des Wärmeleitkörpers.

Der Wärmeleitkörper ist und die Folie bzw. die Folienstreifen können aus Aluminium oder Kupfer oder einer Legierung oder einer Materialzusammensetzung damit ausgebildet sein.

Der Wärmeleitkörper weist eine Wandstärke zwischen 10 µm und 100 µm auf. Die Folie bzw. die Folienstreifen können jeweils eine Wandstärke von wenigstens etwa 10 µm und von höchstens etwa 100 µm, vorzugsweise wenigstens etwa 15 µm und höchstens etwa 50 µm aufweisen.

Die Wärmeträgerfluidleitung ist aus Kunststoff hergestellt.

Die Wärmeträgerfluidleitung kann eine Wandstärke von wenigstens etwa 0,2 mm, vorzugsweise wenigstens etwa 0,5 mm, insbesondere wenigstens etwa 1 mm aufweisen. Die Wärmeträgerfluidleitung kann eine Wandstärke von höchstens etwa 5 mm, vorzugsweise höchstens etwa 1 bis 2 mm aufweisen.

In Ausführungsformen ist die Wärmeträgerfluidleitung mäanderförmig. Vorzugsweise sind die in die Nuten der Schablone eingedrückten Abschnitte der Kanäle gerade Abschnitte der Wärmeträgerfluidleitung. Dabei kann die Wärmeträgerfluidleitung vor dem Eindrücken aus einem Stück in die Mäanderform gebracht werden oder vor dem Eindrücken aus geraden Abschnitten und gekrümmten Verbinderabschnitten bzw. -stücken zusammengesetzt werden oder nach dem Eindrücken von vorzugsweise geraden Abschnitten durch Anbringen von Verbinderabschnitten bzw. -stücken vervollständigt werden.

Der Wärmeleitkörper ist aus eine flexiblen Folie gebildet. Eine Folie ist im Sinne der Erfindung ein Bauteil, welches in zwei Raumrichtungen beträchtlich, das heißt um mehrere Größenordnungen, größere Abmessungen als in einer verbleibenden Raumrichtung, so dass es zwei ausgedehnte Hauptflächen und umlaufende Randflächen aufweist.

Die Erfindung ist auch nicht auf rechteckige Wärmeleitkörper beschränkt, vielmehr können die Hauptflächen der Wärmeleitkörper in der Draufsicht auch rund, dreieckig, hexagonal oder von anderer Form sein.

Das Wärmetauscherelement kann ferner einen Rahmen oder dergleichen aufweisen. Ferner können Leuchtmittel oder dergleichen integriert werden.

Der Wärmeleitköper kann ferner derart geformt sein, um nahezu beliebig dreidimensional geformte Oberfläche zu bedecken. Dies kann zum Beispiel das Dach eines Kraftfahrzeuges sein. Neben der Funktion, einen Raum zu kühlen oder zu erwärmen, wie es oben beschrieben wurde, kann der Wärmeleitkörper als aktive Dämmung genutzt werden. So kann eine Wandung, an der der Wärmeleitköper befestigt ist, einer Hitze- oder Kältequelle ausgesetzt sein, z.B. ein Fahrzeuginnenraum, im Sommer oder im Winter. Die Kälte- oder Wärmestrahlung wird von dem Wärmeleitkörper absorbiert und abtransportiert. Die Temperatur bleibt so im Innenraum stabil. Beispielhaft wäre ein im Wüstenklima stehendes Auto. Die Dachtemperatur kann schnell über 80 °C erreichen, während die Lufttemperatur nur 30 °C beträgt. Hier kann durch einen Trockenkühler am Fahrzeug die überschüssige Hochtemperaturwärme oberhalb von 30 °C sehr energieeffizient an die Umgebungsluft abgeführt werden. Ein im Fahrzeug angeordnetes Armaturenbrett wäre eine weitere Anwendungsmöglichkeit.

Im Rahmen eines weiteren, nicht unter die Erfindung fallenden Beispiels wird ein Gebäudepaneel mit einem Wärmetauscherelement, das eine Wärmetauschfläche aufweist, einer Kühleinrichtung und einer Auffangvorrichtung vorgeschlagen, welches derart ausgebildet ist, dass es die Luftfeuchtigkeit der umgebenen Luft reduzieren kann. Dazu kühlt die Kühleinrichtung die Wärmetauschfläche auf eine Temperatur, welche unter dem Taupunkt des Wasserdampfes in der umgebenen Luft liegt. Somit schlägt sich die Luftfeuchtigkeit an der Wärmeübergangsfläche nieder. Dieser Niederschlag kann als Wassertropfen abfließen und dabei noch mehr Niederschlag mitnehmen. Es ist eine Auffangvorrichtung vorgesehen, in der das Wasser abfließen kann. Der Tropfenabfluss trägt zu einer gleichmäßigen Temperaturverteilung bei. Es wird kein aufwendiger und wartungsanfälliger offener Wasser- oder Kühlkreislauf benötigt und somit besteht eine hohe Einsparung für den Nutzer. Die Kälteerzeugung kann durch einen Kaltwassererzeuger, z.B. Kompressionskälte, oder durch den Kaltwasservorlauf der Verbraucher bereitgestellt werden. Anwendungsfall sind hier z.B. Raststätten, oder öffentliche Dusch- und Waschräume, in denen hohe Feuchtelasten und hohe Wassermengen benötigt werden. Durch die Überschneidung von Netzkaltwasserbedarf und hoher Feuchtelast kann durch die aktiv durch das kalte Netzwasser temperierte Oberfläche die Feuchte aus dem Raum abgeführt werden. Zusätzlich erwärmt sich gleichzeitig das Wasser, was zu einem geringeren Warmwasserwärmebedarf führt. Zusätzlich reduziert sich die Feuchtelast im Raum, da die Raumluftfeuchte an den gekühlten Flächen ausfällt, und dadurch nicht mehr durch die Klimaanlage abgeführt werden muss.

Es ist vorteilhaft, wenn das Gebäudepaneel eine Fläche von mindestens 1 m², 5 m² oder zumindest 10 m² aufweist. Optional ist das Paneel segment- oder modulweise aufgebaut. Je größer die Fläche ist, desto mehr Wasserdampf kondensiert bei gleicher Temperatur. Die Fläche ist proportional zur Leistung des Gebäudepaneels. Dadurch kann bei einer großen Fläche eine geringere Differenz zur Raumtemperatur gewählt werden, wodurch die Raumluft wenig gekühlt wird.

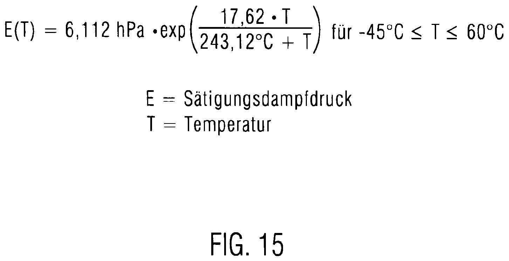

Am Taupunkt, auch Taupunkttemperatur genannt, beträgt die relative Luftfeuchtigkeit 100%. Bei konstantem Druck muss die Temperatur der Luft niedriger sein als der Taupunkt, damit sich der in der Luft enthaltende Wasserdampf als Nebel oder Tau abscheiden kann. Über die Magnus-Formel lässt sich der Taupunkt näherungsweise berechnen (Fig. 15).

Die Kühleinrichtung ist eine Vorrichtung zum Kühlen eines Fluids in dem Wärmetauscherelement des Gebäudepaneels. Das Fluid kühlt die Wärmetauschfläche. Die Kühleinrichtung kann unterschiedlich ausgeprägt sein. Zum Beispiel kann die Kühleinrichtung ein Peltier-Element aufweisen oder derart ausgebildet sein, dass der Phasenübergang eines Kühlmittels, wie beispielsweise Trockeneis, das Fluid kühlt. Andere Ausprägungen der Kühleinrichtung können eine Kompressionskältemaschine oder eine Absorptionskältemaschine sein.

Es ist vorteilhaft, wenn das Gebäudepaneel eine dem Wärmetauscherelement vorgelagerte Vorsatzwand aufweist. Diese verdeckt optisch das Wärmetauscherelement. Außerdem verhindert es den direkten Kontakt mit der nass-kalten Oberfläche des Wärmetauscherelements. Zusätzlich kann die Vorsatzwand beliebig gestrichen und tapeziert werden. Das Aufhängen von Bildern mindert die Leistung ebenfalls nicht. Es ist vorteilhaft, wenn die Vorsatzwand mindestens 5 cm, 10 cm oder insbesondere 25 cm, vor der Wärmeübergangsfläche angeordnet ist.

Die Vorsatzwand kann Luftdurchlässig sein, indem sie zum Beispiel aus einem mit Stoff überzogenen Rahmen besteht.

Besonders vorteilhaft erweist sich eine Vorsatzwand aus Gipskarton. Gipskarton ist stabil, leicht zu verbauen und thermisch isolierend. Damit Raumluft zu dem Wärmetauscherelement gelangt, muss die Vorsatzwand mindestens ein Loch aufweisen, vorzugsweise als Luftschlitz ausgeprägt. Besonders vorteilhaft sind zumindest zwei Luftschlitze, welche oben und unten an der Wand angeordnet sind, so dass die Luft entlang dem Wärmetauscherelement zirkulieren kann (umgekehrter Kamineffekt).

Es ist vorteilhaft, wenn die Seite der Vorsatzwand, die zum Wärmetauscherelement zeigt, mit einem speziellen Mittel bestrichen ist, welches Schimmel und Algenbefall verhindert. Optional kann die Rückseite der Vorsatzwand mit einer hochreflektierenden Beschichtung, z.B. Aluminiumfolie, beschichtet sein. Dadurch wird ein Teil des Wärmeabflusses aus der Vorsatzschale unterbunden und die Gefahr der Taupunktunterschreitung ist geringer. Für Wartungsarbeiten kann die Vorsatzschale auf- oder abklappbar vor dem Element befestigt sein.

Es ist vorteilhaft, wenn an mindestens einem Loch beziehungsweise Schlitz sich ein Ventilator befindet, der entweder feuchte Luft in den Hohlraum zwischen Wärmeübergangsfläche und Vorsatzwand hinein oder trockene Luft hinausbläst.

Um die Kontaktoberfläche zu vergrößern, ist es vorteilhaft, wenn diese dreidimensionale Strukturen aufweist. Dies ist zum Beispiel durch eine gewellte oder zickzackförmige Wärmeübergangsfläche gegeben. Das Wärmetauscherelement kann auch mit Lamellen versehen sein.

Weiterhin kann das Gebäudepaneel derart ausgebildet sein, dass die Wärmeübergangsfläche aus einem beständigen Material, wie zum Beispiel Glas oder Metall, besteht, um so die Reinigung zu vereinfachen. Denn aufgrund des Feuchtefilms fallen ebenso Luftschwebstoffe und Keime an der aktivierten Oberfläche aus. Dies sorgt für eine Reinigung der Luft. Durch die konstante Betauung aus Kühlung und beständige Feuchtigkeit, kann so einer Schimmelbildung verhindert werden. In der Regel ist die Oberfläche so beschaffen, das eine einfache Reinigung bzw. Desinfektion möglich ist.

Um eine bessere Selbstreinigung zu erziehen, wodurch auch die Keimbelastung reduziert wird, kann die Beschichtung durch eine Mikro- und/oder Nanostrukturierung eine superhydrophobe Oberfläche aufweisen. Im allgemeinen Sprachgebrauch besitzt eine solch strukturierte Oberfläche einen Lotuseffekt.

Die Oberfläche kann auch derart behandelt sein, dass sie eine antibakterielle Wirkung aufweist. Dies kann zum Beispiel durch eine Aluminium-Silikat-Matrix erreicht werden, da dort durch umgebende Feuchtigkeit verschiedene Metallionen aktiviert werden, welche die Bildung und das Wachstum von Bakterien und Pilzkulturen verhindert. Eine Alternative dazu ist Titandioxid, bei dem ein photokatalytischer Prozess ausgelöst wird, wodurch Mikroorganismen wie Bakterien, Viren und Pilze im oberflächennahen Bereich oxidiert werden.

Auch Kleinstteilchen wie Staub und Bakterien werden mit abgeschwemmt. Die Wärmeübergangsfläche reinigt sich somit von selbst. Der Effekt ist hier analog zu Beschichtungen von PV-Zellen.

Zusätzlich kann der Auffangbehälter derart ausgebildet sein, dass er an einen Hauswasserabfluss und/oder Wasserrückgewinnungssystem angeschlossen ist, und/oder derart ausgebildet sein, dass er transportiert und geleert werden kann. Auch ist es möglich, den Wasseranschluss zum Reinigen nur temporär auf der Oberfläche zu betreiben. Dadurch werden die ausgefallenen Schwebstoffe, Beläge abgeführt.

Nachfolgend wird die Erfindung beispielhaft anhand der in den Zeichnungen dargestellten Ausführungsbeispiele erläutert. In den Zeichnungen zeigen schematisch:
- Figur 1: einen Ausschnitt eines Wärmetauscherelements gemäß einem Ausführungsbeispiel der Erfindung in einer Querschnittsansicht,
- Figuren 2A bis 2G: Schritte eines Herstellungsverfahrens eines Wärmetauscherelements gemäß einem Ausführungsbeispiel der Erfindung in Querschnittsansichten,
- Figuren 3A und 3B: einen Schritt eines Herstellungsverfahrens eines Wärmetauscherelements und ein Wärmetauscherelement gemäß einem Ausführungsbeispiel der Erfindung in Querschnittsansichten,
- Figuren 4A und 4B: einen Schritt eines Herstellungsverfahrens eines Wärmetauscherelements und ein Wärmetauscherelement gemäß einem Ausführungsbeispiel der Erfindung in Querschnittsansichten,
- Figuren 5A und 5B: einen Schritt eines Herstellungsverfahrens eines Wärmetauscherelements und ein Wärmetauscherelement gemäß einem Ausführungsbeispiel der Erfindung in Querschnittsansichten,
- Figuren 6A und 6B: ein Wärmeleitkörper für ein Wärmetauscherelement und ein Wärmetauscherelement gemäß einem Ausführungsbeispiel der Erfindung in einer perspektivischen bzw. einer Querschnittsansicht,
- Figur 7: ein Wärmetauscherelement gemäß einem Ausführungsbeispiel der Erfindung in einer Querschnittsansicht,
- Figur 8: ein Wärmetauscherelement gemäß einem Ausführungsbeispiel der Erfindung in einer Querschnittsansicht,
- Figur 9: ein Wärmetauscherelement gemäß einem Ausführungsbeispiel der Erfindung in einer Querschnittsansicht,
- Figur 10: ein Wärmetauscherelement gemäß einem Ausführungsbeispiel der Erfindung in einer Draufsicht,
- Figur 11: ein Wärmetauscherelement gemäß einem Ausführungsbeispiel der Erfindung in einer Draufsicht,
- Figur 12: ein Wärmetauscherelement gemäß einem Ausführungsbeispiel der Erfindung in einer Draufsicht,
- Figur 13a: ein Gebäudepaneel gemäß einem Ausführungsbeispiel der Erfindung in einer Draufsicht,
- Figur 13b: ein Gebäudepaneel gemäß einem Ausführungsbeispiel der Erfindung in einer Querschnittsansicht,
- Figur 14: ein Funktionsprinzip eines Gebäudepaneel gemäß einem Ausführungsbeispiel der Erfindung in einer Querschnittsansicht, und
- Figur 15: die Magnus-Formel.

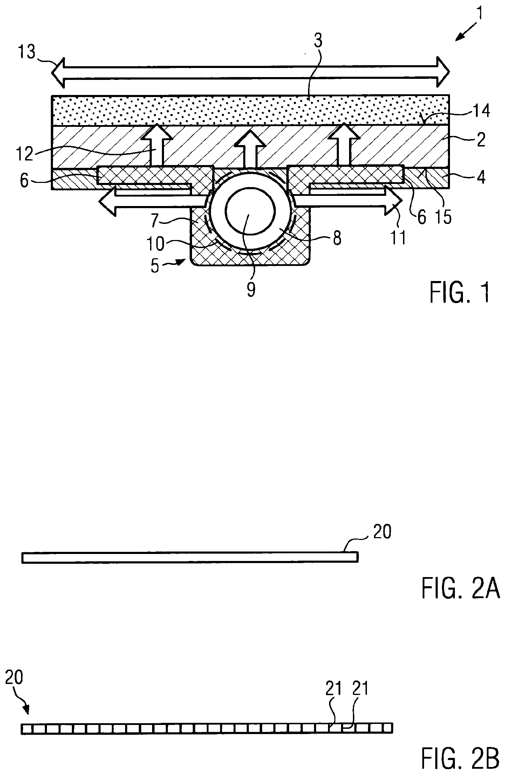

Nachfolgend wird ein Ausführungsbeispiel eines Wärmetauscherelements erläutert (Figur 1).

Ein Wärmetauscherelement 1 weist einen wärmeleitenden Wärmeleitkörper 2 auf.

Der Wärmeleitkörper 2 ist in diesem Ausführungsbeispiel eine Aluminiumfolie mit einem hohen Wärmeleitvermögen von bspw. etwa 235 W/m*K. Die Erfindung ist hierauf jedoch nicht beschränkt. Der Wärmeleitkörper 2 ist erfindungsgemäß als flexible Folie asugebildet und insbesondere in der Draufsicht rechteckig und weist somit zwei Hauptflächen und vier Randseiten auf. Eine Hauptfläche des Wärmeleitkörpers 2 ist als eine Wärmeübergangsfläche 14, die gegenüberliegende Hauptfläche als eine Montagefläche 15 definiert. Auf der Wärmeübergangsfläche 14 des Wärmeleitkörpers 2 ist eine Beschichtung 3 angeordnet. Die Beschichtung 3 ist in diesem Ausführungsbeispiel eine schwarze Farbe und thermisch hochemissiv. Auf der Montagefläche 15 des Wärmeleitkörpers 2 ist mittels eines wärmeleitenden Klebstoffs 4 ein Kanal 5 mit einer darin eingebetteten Wärmeträgerfluidleitung 8 angeordnet. Der Kanal 5 ist im Querschnitt etwa Ω-förmig ausgebildet und weist einen rinnenförmigen Aufnahmeabschnitt 7 sowie zwei seitlich an den Aufnahmeabschnitt 7 angebundene Laschen 6 auf. Der Kanal 5 ist in diesem Ausführungsbeispiel ebenfalls ein homogenes Aluminiumteil. Die Wärmeträgerfluidleitung 8 ist im Querschnitt kreisringförmig. Die Wärmeträgerfluidleitung 8 weist einen Innenraum 9 auf, der im Betrieb mit einem Wärmeträgermedium gefüllt ist. Das Wärmeträgermedium ist ein Gas oder eine Flüssigkeit und insbesondere Wasser bzw. Wasser, das mit einem Frostsschutzmittel wie z.B. Glykol, versetzt ist. Frostschutzmittel besitzen in der Regel nicht nur die Eigenschaft, dass sie den Schmelzpunkt herabsetzen, sondern auch den Siedepunkt hochsetzen, wodurch der Anwendungsbereich eines solchen Fluides sowohl im kalten wie im heißen Bereich ausgedehnt wird.

In der Figur 1 sind Wärme- bzw. Kälteströme 11, 12, 13 so dargestellt, dass Wärme bzw. Kälte aus dem Wärmeträgermedium (-fluid) in der Wärmeträgerfluidleitung 8 entnommen und an die Umgebung des Wärmetauscherelements 1 abgegeben wird. Ein Kältestrom ist ein Wärmestrom in entgegengesetzte Richtung. Das Wärmetauscherelement 1 kann somit als Heizelement oder Kühlelement genutzt werden. Wenn das Wärmetauscherelement 1 also als Kühlelement genutzt wird, wird Wärme aus der Umgebung des Wärmetauscherelements 1 über das Wärmeträgermedium in der Wärmeträgerfluidleitung 8 abgeführt.

Wie aus Vorstehendem ersichtlich, ist die Wärmeträgerfluidleitung 8 in wärmeleitendem Kontakt in dem Aufnahmeabschnitt 7 des Kanals 5 eingebettet. Über den wärmeleitenden Klebstoff 4 wie auch die Nähe zu dem Wärmeleitkörper 2 ist auch wärmeleitender Kontakt mit dem Wärmeleitkörper 2 gegeben. Somit ist die Wärmeträgerfluidleitung 8 allseits von einer Wärmekontaktfläche 10 umgeben, die einen direkt leitenden Wärmeübergang von der Wärmeträgerfluidleitung 8 in den Aufnahmeabschnitt 7 des Kanals 5 wie auch in der Wärmeleitkörper 2 ermöglicht. Ferner kann ein konvektiver Wärmefluss 11 über die seitlich an den Aufnahmeabschnitt 7 angrenzenden Flächen erfolgen und die hierdurch transportierte Wärme an diesen Flächen aufgenommen werden. Über die Wandung des Aufnahmeabschnitts 7 aufgenommene Wärme wird auch in die Laschen 6 des Kanals 5 geleitet und von diesen direkt leitend in der Wärmeleitkörper 2 überführt (leitender Wärmefluss 12). Über die thermisch hochemissive Beschichtung 3 wird die von der Montageseite 15 aus aufgenommene und durch der Wärmeleitkörper 2 hindurch auf die Wärmeübergangsfläche 14 geleitete Wärme in Form von Wärmestrahlen 13 an die Umgebung abgegeben.

Andererseits kann beispielsweise ein warmer Bereich, der auf der Seite der Beschichtung 3 über die Montagefläche 15 mit der Wärmeträgerfluidleitung 8 in Verbindung steht, über das Wärmetauscherelement 1 gekühlt werden, indem überschüssige Wärme an der Wärmeübergangsfläche 14 aus der Umgebung aufgenommen wird.

Die Wärmeträgerfluidleitung 8 ist in diesem Ausführungsbeispiel aus Kunststoff, vorzugsweise vernetztem Polyethylen (PEX) hergestellt. Die Wärmeträgerfluidleitung 8 ist in diesem Ausführungsbeispiel als ein Kapillarrohr mit einer Wandstärke von etwa 0,8 mm und erfindungsgemäß mit einem Innendurchmesser von etwa 2,5 mm bis 3,0 mm und insbesondere etwa 2,9 mm ausgebildet.

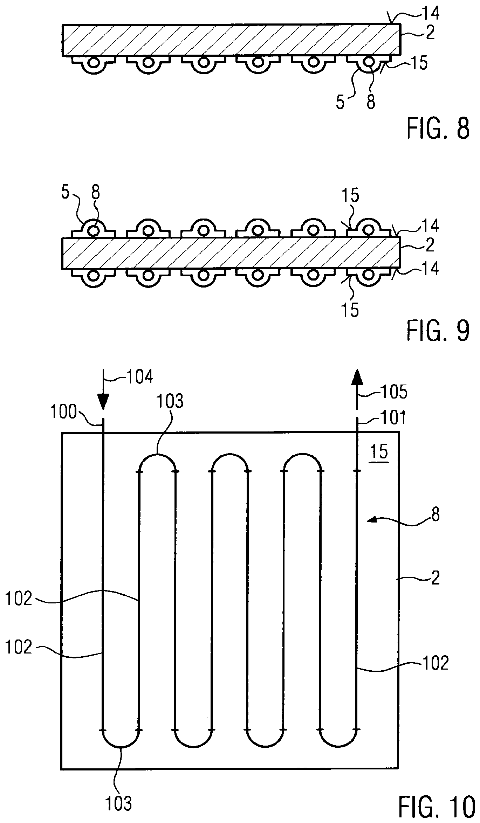

Es versteht sich, dass das Wärmetauscherelement 1 nicht lediglich auf den in Fig. 1 dargestellten Ausschnitt beschränkt ist, sondern über die Montagefläche 15 verteilt eine Vielzahl von nebeneinander angeordneten Kanälen 5 mit darin eingebetteter Wärmeträgerfluidleitung 8 aufweisen kann (Fig. 8 bis 12).

Die Wärmeträgerfluidleitung 8 weist in einem Ausführungsbeispiel eine Vielzahl von geraden, parallelen Abschnitte 102 auf, die untereinander durch Umkehrabschnitte 103 verbunden sind, um eine schlangen- bzw. mäanderförmige Wärmeträgerfluidleitung 8 auszubilden (Fig. 10). An dem ersten und letzten geraden Abschnitt 102 ist ein Vorlaufanschlussstück 100 für einen Wärmeträger-Vorlauf 104 bzw. ein Rücklaufanschlussstück 101 für einen Wärmeträger-Rücklauf 105 vorgesehen. Die geraden Abschnitte 102 sind dabei in den oben beschriebenen Kanälen 5 (in Fig. 10 nicht dargestellt) aufgenommen, während die Umkehrabschnitte 103 frei über der Montagefläche des Wärmeleitkörpers 2 liegen. Die geraden Abschnitte 102 sind in diesem Ausführungsbeispiel einstückig mit den Umkehrabschnitte 103 sowie dem Vorlaufanschlussstück 100 und dem Rücklaufanschlussstück 101 ausgebildet. Das ermöglicht eine Vorformung der Wärmeträgerfluidleitung 8 und stellt die Dichtigkeit der Wärmeträgerfluidleitung 8 über die gesamte Länge sicher.

Als Variante zu diesem Ausführungsbeispiel können optional auch gekrümmte Kanalabschnitte für die Umkehrabschnitte 103 vorgesehen sein, um den Wärmeübergang weiter zu optimieren.

In einer weiteren Variante können die geraden Abschnitte 102 und Umkehrabschnitte 103 separat ausgebildet sein. Diese Ausführungsart kann auch einen kompakten Transport der Einzelteile ermöglichen.

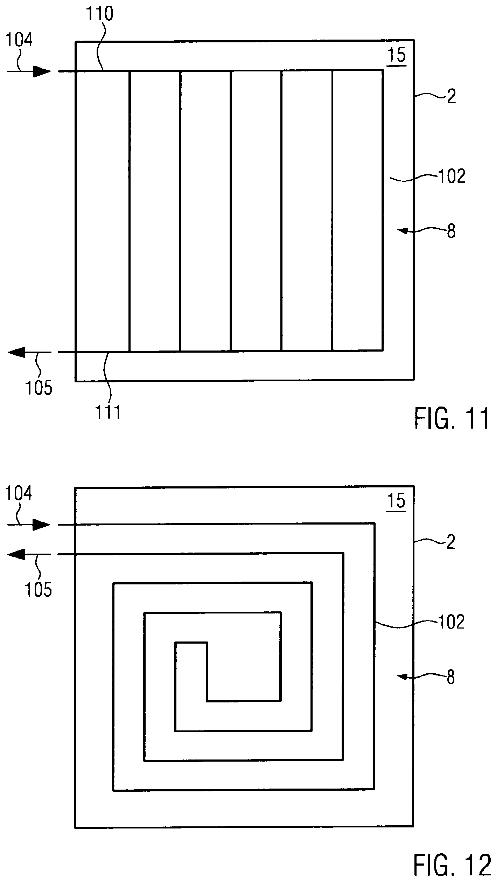

In einer weiteren Variante können die geraden Abschnitte 102 an einem Ende mit einem Vorlaufverteilerabschnitt 110 und an einem anderen Ende mit einem Rücklaufverteilerabschnitt 111 verbunden sein (Fig. 11).

In einer weiteren Variante kann die Wärmeträgerfluidleitung 8 auch schneckenförmig an der Montagefläche 15 des Wärmeleitkörpers 2 verlaufen (Fig. 12).

In einer weiteren Variante kann der Wärmeleitkörper 2 auf beiden Seiten eine Wärmeträgerfluidleitung 8 aufweisen (Fig. 9). Bei dieser Variante sind beiden Hauptseiten des Wärmeleitkörpers 2 sowohl Wärmeübergangsfläche 14 als auch Montagefläche 15.

In Ausführungsvarianten kann die Beschichtung 3 auch ein Vlies, eine elektrochemische Beschichtung oder anderes sein oder kann auch weggelassen werden, wie es die Anforderungen der Anwendung vorgeben. Bevorzugt ist die Beschichtung 3 jedoch thermisch hochemissiv, sie weist also für aus dem Wärmeleitkörper 2 übertragene Wärme ein hohes Abstrahlvermögen bzw. Absorptionsvermögen auf.

In Ausführungsvarianten kann anstelle des wärmeleitenden Klebstoffs 4 ein anderes Haftmittel oder eine andere Art der Verbindung vorgesehen sein. Beispielsweise kann die Verbindung zwischen den Laschen 6 des Kanals 5 und dem Wärmeleitkörper 2 formschlüssig über Verbindungselemente wie etwa Niete, Stifte oder dergleichen, durch Löten, Punktschweißen oder Reibschweißen hergestellt sein.

Die Wärmeträgerfluidleitung 8 kann im Querschnitt auch quadratringförmig, hexagonalringförmig, oktagonalringförmig oder dergleichen sein. In weiteren Ausführungsvarianten kann das Wärmeträgermedium auch ein Kältemittel, ein Öl oder ein anderes Fluid sein.

In einem Verfahren zur Herstellung eines Wärmetauscherelements wird in einem ersten Schritt zunächst eine Folie 20 bereitgestellt (Fig. 2A). Die Folie 20 kann beispielsweise aus Aluminium ausgebildet sein.

In einem zweiten Schritt wird die Folie 20 mit einer Perforation 21 versehen (Fig. 2B). Die Perforation 21 bildet parallele Linien von punkt- oder strichförmigen Löchern und kann beispielsweise durch einen Stanzvorgang oder mittels eines Rollstempels hergestellt werden.

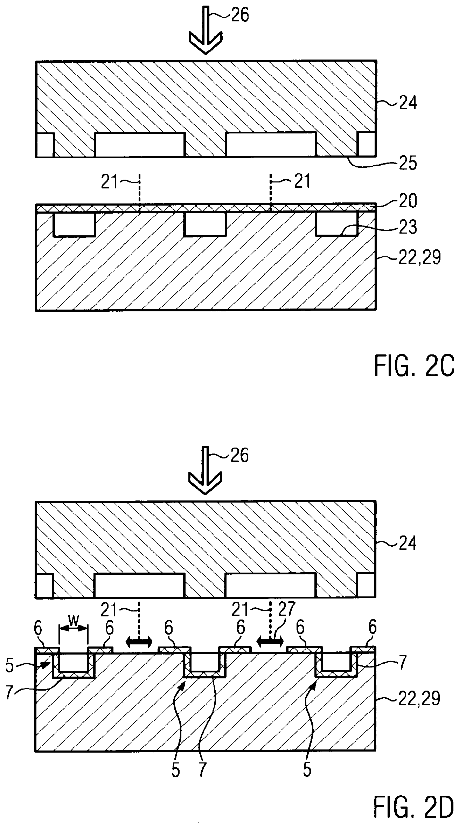

In einem weiteren Schritt wird die mit Perforation 21 versehene Folie 21 auf einer Schablone 22 abgelegt, welche gegenüber einem Stempel 24 mit einer Pressrichtung 26 angeordnet ist (Fig. 2C). Es sind verschiedene Reihenfolgen möglich: Die Folie 20 kann auf der gegenüber dem Stempel 24 angeordneten Schablone 22 abgelegt werden, oder die Schablone 22 kann nach Ablegen der Folie 20 in ein Maschinengestell unter den Stempel 24 gefahren werden, oder der Stempel 24 kann über die Schablone 22 gefahren werden, nachdem die Folie 20 abgelegt worden ist. Die Schablone 22 weist parallele Nuten 23 von etwa rechteckigem Querschnitt auf. Die Nuten 23 weisen den gleichen Abstand voneinander wie die Linien der Perforation 21 der Folie 20 auf. Die Folie 22 wird so auf der Schablone 22 abgelegt, dass die Linien der Perforation 21 jeweils etwa in der Mitte zwischen den Nuten 23 verlaufen. Der Stempel 24 weist Vorsprünge 25 auf, die komplementär zu den Nuten geformt und angeordnet sind. Im vorliegenden Ausführungsbeispiel sind die Vorsprünge 25 mit etwa rechteckigem Querschnitt ausgebildet. Sie sind genau über den Nuten 23 angeordnet. Die Vorsprünge 25 sind im Querschnitt etwas kleiner als die Nuten 23.

In einem weiteren Schritt wird der Stempel 24 in Pressrichtung 26 zugefahren und wieder zurückgefahren (Fig. 2D). Beim Zufahren des Stempels 24 tauchen die Vorsprünge 25 des Stempels 24 in die Nuten 23 der Schablone 22 und nehmen dabei die Folie 20 derart mit, dass die Folie 20 an der Perforation 21 reißt, sodass Folienstreifen entstehen. Ein mittlerer Teil der Folienstreifen wird in die Nuten 23 gezogen, während seitliche Teile der Folienstreifen auf der Schablone 22 gleiten (Gleitrichtung 27). Die so geformten Folienstreifen bilden die späteren Kanäle 5 des Wärmetauscherelements, wobei die in die Nuten 23 gezogenen Teile jeweils den Aufnahmeabschnitt 7 bilden und die auf der Oberfläche der Schablone 22 verbleibenden Teile die Laschen 6 bilden. Die Aufnahmeabschnitte 7 erhalten durch diesen Schritt eine Mündungsweite w.

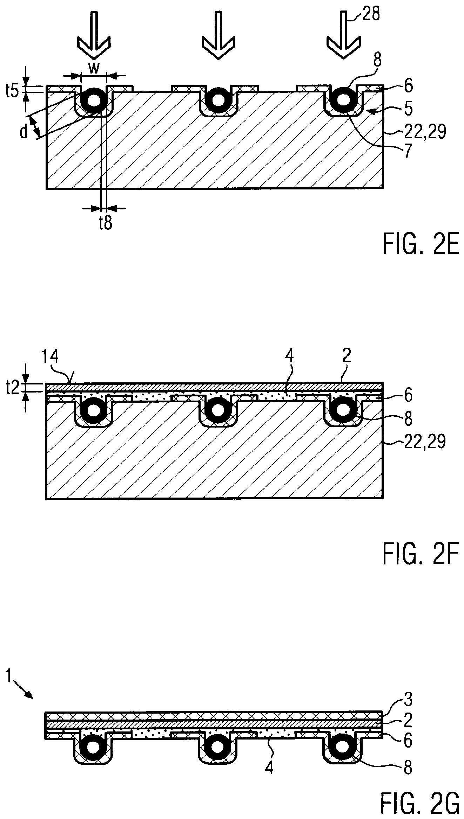

In einem weiteren Schritt wird eine Wärmeträgerfluidleitung 8 in die Aufnahmeabschnitte 7 eingepresst (Fig. 2E, Pressrichtung 28). Die Wärmeträgerfluidleitung 8 ist aus Kunststoff oder Metall (beispielsweise Aluminium, Kupfer oder einer Legierung) hergestellt. In diesem Schritt kann die Wärmeträgerfluidleitung 8 einzelne Rohrstücke aufweisen oder eine durchgängige Leitung sein, die an den Enden Umkehrabschnitte oder Verteilerabschnitte aufweist, wie es oben in Ausführungsbeispielen (Fign. 10, 11, 12) beschrieben wurde. Eine Wandstärke t8 der Wärmeträgerfluidleitungen 8 kann einer Wandstärke t5 der Kanäle 5 entsprechen, oder kann geringfügig oder deutlich größer sein (Fig. 2E). Die Wandstärken kann jedoch auch anhand geeigneter Auslegungskriterien, wie etwa, aber nicht nur, Wärmedurchgang, Wärmeleitung, Gewicht und Festigkeit, bemessen. Bevorzugt beträgt die Wandstärke t5 der Kanäle etwa 50 µm. Ein Außendurchmesser d der Wärmeträgerfluidleitungen 8 kann der Mündungsweite w der Kanäle 5 entsprechen oder geringfügig größer sein, um eine gewisse Klemmwirkung derart zu erzielen, dass die Wärmeträgerfluidleitung 8 in den Aufnahmeabschnitten 7 gehalten wird.

In einem weiteren Schritt wird ein wärmeleitender Klebstoff 4 auf die freiliegenden Oberflächen der Wärmeträgerfluidleitungen 8, Kanäle 5 und Schablone 22 aufgebracht und ein Wärmeleitkörper 2 einer Wandstärke t2 aufgepresst (Fig. 2F).

Danach wird auf der freiliegenden Oberfläche des Wärmeleitkörpers (Wärmeübergangsfläche 14 in Fig. 2F) eine Beschichtung 3 aufgebracht und die Schablone 22 entfernt (Fig. 2G). Damit ist das Wärmetauscherelement 1 fertiggestellt.

Die Schablone 22 kann ein Trägerbauteil 29 sein, das an dem Wärmetauscherelement verbleibt. Es kann jedoch auch das fertige Wärmetauscherelement später von der Schablone 22 getrennt werden, wobei die Schablone 22 ein verlorenes Hilfsbauteil oder bleibender Teil einer Werkzeugvorrichtung sein kann.

In einer Variante des Verfahrens wird nach dem Ausbilden der Kanäle 5 die Schablone 22 entfernt und durch eine zweite Schablone ersetzt. In diesem Zustand wird dann die Wärmeträgerfluidleitung 8 eingepresst. Bei dieser Variante kann die Schablone 22 aus einem harten Werkstoff, wie etwa Stahl oder Hartkunststoff, hergestellt sein und kann die zweite Schablone aus einem weichen oder zumindest weicheren Werkstoff wie etwa einer Schaumplatte oder einem gummielastischen Werkstoff hergestellt sein. Bei dieser Variante kann die zweite Schablone, wenn die Mündungsweite w des Aufnahmeabschnitts 7 des Kanals 5 kleiner als der Außendurchmesser d der Wärmeträgerfluidleitung 8 ist, beim Einpressen der Wärmeträgerfluidleitung 8 nachgeben und an der Stelle der Mündung wieder in die vorherige Form zurückkehren, sodass die Wärmeträgerfluidleitung 8 elastisch in dem Kanal 5 eingeklemmt ist. Es versteht sich, dass in diesem Fall die zweite Schablone als Trägerbauteil 29 an dem Wärmetauscherelement 1 verbleiben kann.

Alternativ zu der Perforation der Folie 20 können auch Folienstreifen hergestellt werden, indem die auf der Schablone 22 abgelegte Folie 20 in Streifen geschnitten oder (ggf. mittels des Stempels 24) gestanzt wird. Weiter alternativ können vorab Folienstreifen vorbereitet und auf der Schablone 22 abgelegt werden. Alternativ zu der Ablage auf der Schablone 22 kann die Folie 20 oder können entsprechend vorbereitete Folienstreifen auch von dem Stempel 24 aufgenommen, etwa durch Vakuum, elektrostatische Wirkung, Fluidanhaftung oder dergleichen) und über die Schablone 22 gebracht werden. Bei letzterer Alternative ist durch geeignete Mittel dafür zu sorgen, dass sich der Stempel 24 nach dem Ausbilden der Kanäle 5 leicht von der Folie 20 löst, ohne diese zu verschieben oder zu verletzen.

Zu dem Wärmeleitkörper 2 und der Beschichtung 3 wie auch allen anderen Bauteilen des Wärmetauscherelements 1 können die zu dem Wärmetauscherelement 1 in Fig. 1 gemachten Erläuterungen angenommen werden. Auch alle weiteren oben oder weiter unten beschriebenen Abwandlungen, Varianten, Alternativen und Optionen können angewendet werden, sofern es sich nicht aus physikalischen Gründen ausgeschlossen ist.

Der Wärmeleitkörper 2 wurde oben als homogenes Aluminiumbauteil beschrieben. Es können aber auch andere Metalle wie etwa Kupfer oder eine Legierung verwendet werden. Bevorzugt ist der Wärmeleitkörper 2 als Folie ausgeführt.

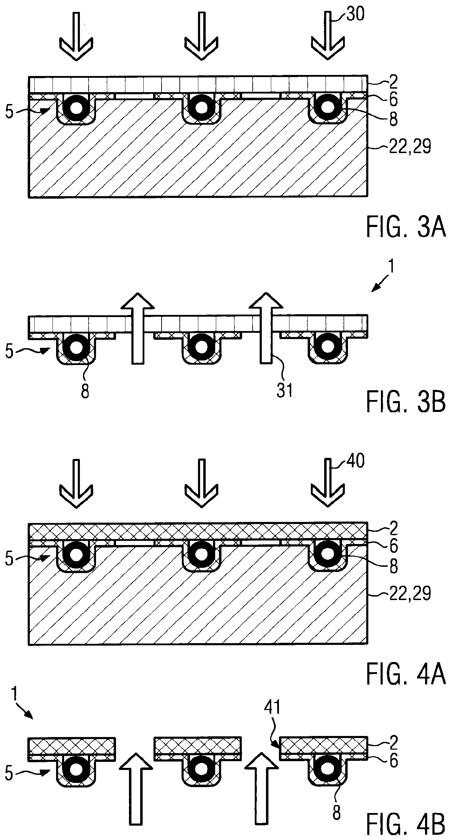

In einem weiteren Ausführungsbeispiel, das eine Variante des zuerst beschriebenen Ausführungsbeispiels ist, ist der Wärmeleitkörper 2 so ausgeführt, dass es für Medien wie etwa Luft oder Flüssigkeiten durchlässig ist, beispielsweise als Gitter aus Metall oder Kunststoff. Der Wärmeleitkörper 2 kann in dem Herstellungsverfahren auf die Kanäle 5 und Wärmeträgerfluidleitung 8 in der Schablone 22 aufgepresst werden (Fig. 3A, Pressrichtung 30). Nach Entfernen der Schablone 22 kann durch das Gitter des Wärmeleitkörpers 2 ein konvektiver Wärmefluss 31 erfolgen (Fig. 3B). Durch die freien Zwischenräume kann der konvektive Anteil gesteigert werden. In dieser Variante kann das Wärmetauscherelement 1 beispielsweise, aber nicht nur, mit thermisch aktivierten Streckmetallgitterdecken, oder für flächige Wärmeübertrager in Wasser, Erdreich, flüssigen Medien, Fassadenbereichen etc. angewendet werden. Das Gitter kann neben der Wärmezu- und -abfuhr auch zum Halten des Abstandes unter den Rohren dienen und bietet die Möglichkeit zur akustischen Verbesserung durch dahinterliegende akustische Absorber. Das Gitter kann auch ein nachträglich oder vorher perforiertes oder gelochtes, wärmeleitendes oder nicht wärmeleitendes Blech oder Kunststoffteil sein. Wenn die Schablone 22 ebenfalls für ein Medium durchlässig ist, kann sie auch als Trägerbauteil 29 an dem Wärmetauscherelement 1 verbleiben.

In einem weiteren Ausführungsbeispiel, das eine Variante des zuerst beschriebenen Ausführungsbeispiels ist, ist der Wärmeleitkörper 2 als Mikro- oder grobgelochtes Metallblech ausgeführt. Der Wärmeleitkörper 2 kann in dem Herstellungsverfahren auf die Kanäle 5 und Wärmeträgerfluidleitung 8 in der Schablone 22 aufgepresst werden (Fig. 4A, Pressrichtung 40). Nach Entfernen der Schablone 22 kann durch die Lochung 41 des Wärmeleitkörpers 2 ein konvektiver Wärmefluss 41 erfolgen (Fig. 4B). Durch die belüfteten Zwischenräume und Vergrößerung der Oberfläche kann der konvektive Anteil gesteigert werden. In dieser Variante kann das Wärmetauscherelement 1 beispielsweise, aber nicht nur, für thermisch aktivierte Rohre in Fassadenkonstruktionen oder in Eisspeichern, Deckenbereichen oder in Wand oder Decke eingeputzt oder eingegossen (z.B. in Beton) angewendet werden. Wenn die Schablone 22 ebenfalls für ein Medium durchlässig ist, kann sie auch als Trägerbauteil 29 an dem Wärmetauscherelement 1 verbleiben.

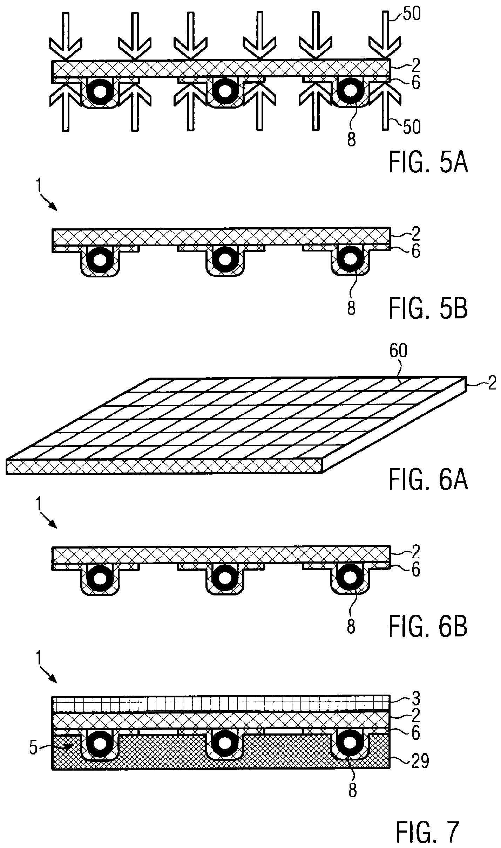

In einem weiteren Ausführungsbeispiel, das eine Variante des zuerst beschriebenen Ausführungsbeispiels ist, wird der Wärmeleitkörper 2 in dem Herstellungsverfahren ohne Klebstoff auf die Kanäle 5 und Wärmeträgerfluidleitung 8 in der Schablone 22 gefügt (Fig. 5A, Pressrichtung 50, Fig. 5B). Die Umgehung des Klebstoffs kann beispielsweise, aber nicht nur, durch Pressfügen oder Umformen des Aluminiums verwirklicht werden. Optional kann eine haftende Wärmeleitpaste aufgetragen werden. Durch das kraft- und/oder formschlüssige Fügen kann der Klebstoff als potenzielle Versagensquelle vermieden werden.

In einem weiteren Ausführungsbeispiel, das eine Variante des zuerst beschriebenen Ausführungsbeispiels ist, weist der Wärmeleitkörper 2 eine Perforation 60 auf (Fig. 5A). Die Perforation 60 kann beispielsweise eine Kreuzperforation in rechteckiger oder sonst sinnvoller Form für freie Formen der Wärmeträgerfluidleitung 8 sein (Fig. 5B). Dadurch werden ebenso individuelle Formgebungen ermöglicht oder erleichtert.

In einem weiteren Ausführungsbeispiel, das eine Variante des zuerst beschriebenen Ausführungsbeispiels ist, weist der Wärmeleitkörper 2 eine selektive Beschichtung 3 auf (Fig. 7). Die Beschichtung 3 kann beispielsweise im Kleb-, Sputter- oder einem andersartigen Beschichtungsverfahren aufgebracht werden. Die Beschichtung 3 kann zur Nutzung der Wärme oder Kälte mit ad- oder absorptiven Materialen wie etwa Zeolith oder Silicagel ausgeführt sein. Hierdurch können beispielsweise kostengünstige, z.B. wärmegetriebene Kältemaschinen verwirklicht werden. Die Beschichtung 3 kann auch zur selektiven Beeinflussung physikalischer Eigenschaften der Oberfläche ausgelegt sein, wie etwa des Emissionsverhaltens der Beständigkeit gegenüber Substanzen oder aggressiven Atmosphären.

Aufgrund großer Rohrquerschnitte und einer physikalischen Limitierung der Wärmeleitfähigkeit der Materialien war es bei bisherigen Systemen erforderlich, hohe Materialstärken zu wählen.

Der Ansatz der vorliegenden Erfindung ist es, den Rohrquerschnitt durch die Verwendung kosteneffizienter Kapillarrohrmatten zu reduzieren. Damit kann die Materialstärke der Wärmeleitbleche von ca. 2 mm auf bis zu 0,05 mm reduziert werden, und durch den geringen Abstand der Rohre (Wärmeträgerfluidleitung 8) von 1-5 cm kann die Wärmeableitung maßgeblich verbessert werden. Durch den geringen Abstand der Kapillarrohre wird ein physikalisches und materialtechnisches Optimum aus Wärmeleitung und Materialeinsatz erreicht.

Zur Herstellung des Wärmetauscherelements 1 kann das Metall oder folienartige Material beidseitig oder einseitig mit einem Klebstoff beschichtet werden, um später eine optimale thermische Kopplung zwischen dem Kapillarrohr und der Oberfläche zu erreichen. Die Klebeschicht füllt eventuell entstehende Lücken aus und optimiert den Wärmeübergang durch die Verbindung mit den Kapillarrohren. Das Folienmaterial kann mit Klebstoff beschichtet werden, dadurch erhöht sich der Vorfertigungsgrad und es vereinfacht sich die Verarbeitbarkeit und Prozesssicherheit im Produktionsprozess.

Mit der Verwendung einer relativ dünnen Aluminium- oder Metallschicht wird es möglich, material- und kostengünstiges, folienartiges und leicht zu verarbeitendes Material zu verwenden. Für die Formgebung der Blechstreifen wird in einem zusätzlichen Verarbeitungsschritt direkt auf einem Dämmelement eines Dämmstoffes oder Trennmaterials, bzw. einer Schablone (22, 29 in Fign. 2C-2F u.a.) in eine geschäumte, geschlitzte oder vorgeformte Nut (23 in Fig. 2C) gepresst. Dies erfolgt mit einer definierten Gegenpressform (Stempel 24 in Fign. 2C. 2D). Um die entstehende Dehnung zu kompensieren, und damit dem unkontrollierten Zerreißen des Materials vorzubeugen, ist die Trennschicht an der Rissstelle perforiert. Die Perforation ist dabei so gewählt, dass das Material während des Press- und Umformprozesses definiert auseinanderreißt.

Das mit Klebstoff beschichtete Folienmaterial wird im mittleren Abstand der Kapillarrohre perforiert. Durch die Perforation reißt das Material kontrolliert ein und kann in die für die Kapillarrohre erforderlichen Nuten, eingeformt werden. Resultat ist, dass die ca. 15-1000µm starken und beidseitig mit wärmeleitendem Klebstoff beschichteten Aluminiumbleche optimal an die Nuten und Kapillarrohre angepasst sind. Optional wird anschließend das verpresste Bauteil, ohne das beschriebene Verbundelement, aus der Gegenpressform entnommen.

Anschließend wird die Kapillarrohrmatte (Wärmeträgerfluidleitung 8) in die Nuten eingepresst. Diese formt sich in einem neuen Pressprozess optimal an die vorgeformten metallenen Wärmeleitblechstreifen. Diese befinden sich innerhalb der vorher definierten Nuten und werden daher optimal mit einer Decklage beschichtet und thermisch an diese gekoppelt.

Das Einziehen der Kapillarmatten bringt die Rohre in Position für eine optimale thermische Kopplung und Verklebung.

Die in die Nuten eingepressten Rohre werden anschließend mit einem Metallblech (Wärmeleitkörper 2) vorderseitig beschichtet. Dadurch ist eine nahezu vollständige Umschließung des Kapillarrohres mit einem äußerst ressourcenschonenden und kostengünstigen Verfahren erreicht.

Ein Verpressen der eingezogenen Kapillarmatte mit den klebstoffbeschichteten Wärmeleitblechen mit einer wärmeleitenden Platte kann eine komplette metallene Ummantelung der schlanken Rohrquerschnitte schaffen. Durch diesen Prozess wird ein nahezu vollständiges Umschließen der schlanken Kapillarrohre gewährleistet. Dies hat, insbesondere für flächige Systeme, eine hohe Steigerung der Wärmeübertragungseffizienz zur Folge. In Verbindung mit einem geeigneten Dämmstoff kann so ein Verbundbauteil mit geringem Gewicht und Material-, sowie Kosteneinsatz geschaffen werden.

Die oberflächenseitige Metallfolie kann eine Stärke von ca. 15-1000 µm besitzen. Alternativ ist die Verwendung von Vliesen oder organischen Materialien, wie z.B. Holz möglich.

Das neue Wärmetauscherelement kann ein Wärmeübertragungssystem bilden, enthaltend zumindest ein Wärmeverteil-Rohrsystem, und Wärmeleitbleche, welche eine thermische Kopplung und flächige Verteilung zwischen dem fluidtragenden System und dem Wärmeleitblech herstellen, welche miteinander gekoppelt sind und durch einen Trennprozess während der Umformung mit dem Rohrsystem verbunden werden. Hierzu kann ein Ausgangswerkstück, etwa eine Folie, für die Wärmeleitbleche vor dem Verpressen eine Perforation aufweisen, die beim Verpressen kontrolliert reißt. Die Wärmeleitbleche können verklebt oder verschweißt werden. Auch Nachformprozesse sind möglich. Das Wärmetauscherelement kann eine nachträgliche Beschichtung durch optische oder technische Elemente erhalten. Dabei ist die Verwendung von wärmeleitenden Klebstoffen vorteilhaft. Auch sind Kombinationen mit selektiven Absorptions-, und Reflexionsmaterialien möglich. Das Wärmetauscherelement ist geeignet zur Integration in Solarkollektorsysteme wie auch zur Integration in thermische Speicherkonzepte.

Das erfindungsgemäße Wärmetauscherelement weist unter anderem folgende Vorteile auf:

| | |
|---|---|
| - Geringes Gewicht: | Statt mehrere mm starken Wärmeleitblechen ist eine bspw. etwa 50 µm starke Folie ausreichend für eine hohe Effizienz. Hohe Effizienz bedeutet in diesem Zusammenhang einen geringen Kosten- und Materialaufwand, um Wärme zwischen einer großen Fläche und einem Fluid auszutauschen. |
| - Geringer Materialeinsatz: | Die geringe Materialstärke verursacht nur wenig Abfall. |
| - Schnelle Verarbeitung: | Durch die Klebstoffvorbeschichtung und Perforation wird ein hoher Vorfertigungsgrad und eine einfache herstellungstechnische Umsetzung erreicht. |
| - Einfache Verarbeitung: | Die leicht zu schneidenden und umformbaren Bleche sind einfach zu handhaben und zu verarbeiten. - Schnelle Reaktionszeit: Durch das geringe Gewicht und eine vollständige Umschließung der Rohrmantelfläche wird eine hohe Übertragungseffizienz und zügige Reaktion gesichert. |
| - Variable Einsatzgebiete: | Große Wärmeübertragungsflächen werden immer wichtiger. Insbesondere bei geringen Temperaturdifferenzen stoßen konventionelle Systeme an Ihre Grenzen. Durch die bestmögliche Kopplung wird hier ein kostengünstiges und hoch effizientes System geschaffen. |

Das neue Wärmetauscherelement kann in Bereichen eingesetzt werden in denen es auf eine gleichmäßige und flächige Wärmeverteilung mit hoher Kühl-, bzw. Heizleistung und geringer Differenz zwischen Fluid- und Oberflächentemperatur besonders ankommt. Besonders hervorzuheben sind folgende Einsatzbereiche:
- Solarthermie oder PV/Solar Hybridmodule - zur Abführung der Wärmeeinträge auf die Oberfläche;
- Kühl-, und Heizdecken zur optimalen Verteilung der Wärme und Kälte auf große Oberflächen;
- Bauteilintegrierte Temperierungssysteme, z.B. in Betonbauteilen oder Dämmstoffkonstruktionen;
- Objektkühlung von Batterien, Möbeln, Schaltschränken, Rechenzentren etc.;
- Hochleistungsfähige Oberflächenkühlung von Klimakammern und Lagerhäusern;
- Wärmeein-, und -austrag aus thermischen, z.B. Eisspeichern oder Latentwärmespeichern mit z.B. Paraffin mit besonders hoher Leistungsdichte bei geringer Temperaturdifferenz;
- Abwärmegewinnung aus Industrieprozessen oder Umweltwärme;
- Bereiche, in denen eine effiziente gleichmäßige und großflächige Wärmeverteilung und Wärmeleistungsübertragung gewünscht ist.

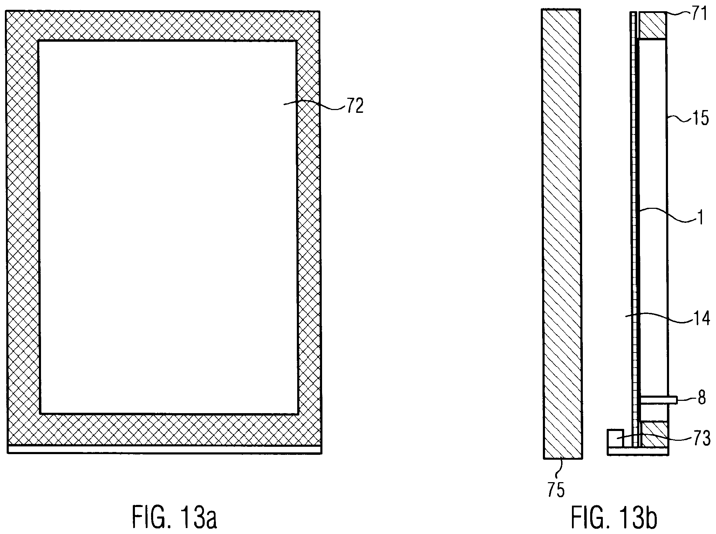

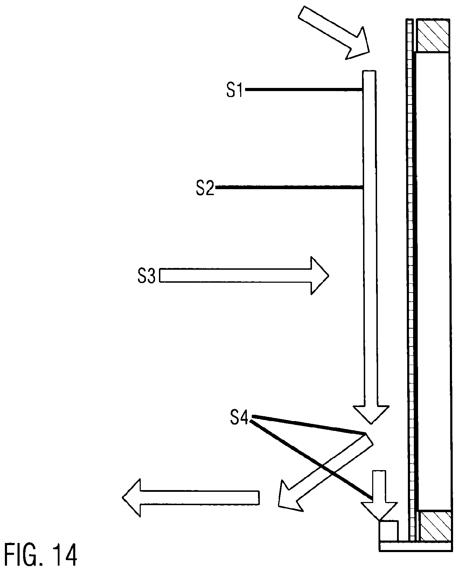

Nachfolgend wird ein weiteres Ausführungsbeispiel beschrieben, wobei gleiche Elemente wie beim vorhergehenden Ausführungsbeispiel mit den gleichen Bezugszeichen versehen sind (Figuren 13a, 13b, 14). Für gleiche Elemente gelten die oben angeführten Erläuterungen, sofern nachfolgend nichts anderes hierzu ausgeführt ist.

Die vorliegende Erfindung umfasst in diesem Ausführungsbeispiel ein Gebäudepaneel 70, das in Gebäuden großflächig an Wände montiert wird. Das Gebäudepaneel 70 weist ein Wärmetauscherelement 1, wie es in einem der oben beschriebenen Ausführungsbeispiele beschrieben ist, einen thermisch getrennten Randverbund 71 und eine Auffangvorrichtung 73 auf.

Das Wärmetauscherelement 1, an dem sich die Luftfeuchtigkeit niederschlagen soll, weist eine Beschichtung 3, einen Wärmeleitkörper 2, einen Klebstoff 4, eine Lasche 6 und eine Wärmeträgerfluidleitung 8 auf. Die Beschichtung 3 an dem Wärmeleitkörper 2 ist in dem Gebäudepaneel 70 von dem thermisch getrennten Randverbund 71 umgeben. Das Gebäudepaneel 70 wird an diesem Randverbund 71 an eine Hauswand montiert. Das Gebäudepaneel 70 ist vertikal ausgerichtet, wobei eine geringe Verkippung die Funktion nicht maßgeblich einschränkt. Die Auffangvorrichtung 73 befindet sich unterhalb der thermisch aktivierten Fläche 72 und fängt das kondensierte Wasser auf.

Die Wärmeträgerfluidleitung 8 ist an einen Wärmeträgervorlauf 104 und an einen Wärmeträgerrücklauf 105 angeschlossen. Die einzelnen Formen und Ausführungsbeispiele dieser Wärmeträgerfluidleitung 8 sind weiter oben ausführlich beschrieben worden.

Die Wärmeübergangsfläche des Wärmeleitkörpers 2 ist vorzugsweise aus einem beständigen Material ausgebildet. Dies kann zum Beispiel Glas oder Metall sein. In diesem Ausführungsbeispiel weist die Beschichtung 3 durch Mikro- und Nanostrukturierung eine superhydrophobe Oberfläche auf. Des Weiteren ist die Oberfläche vorzugsweise mit antibakteriellen Eigenschaften ausgebildet, wie zum Beispiel durch eine Beschichtung mit Titanoxid.

Die Auffangvorrichtung 73 ist derart ausgebildet, dass sie als Rinne in einen Auffangbehälter 74 mündet. Dieser Auffangbehälter 74 ist derart ausgebildet, dass von dort das gesammelte Wasser entweder in einen Hauswasserabfluss oder ein Wasserrückgewinnungssystem abfließen kann, oder ist mit einem Trägersystem derart ausgestattet, dass er einfach abtransportiert und ausgegossen werden kann. Der Auffangbehälter 74 weist vorzugsweise nicht mehr als 20 Liter, insbesondere nicht mehr als 10 und insbesondere nicht mehr als 5 Liter Fassungsvermögen auf.

Vorzugsweise weist der Wärmeleitkörper 2 dreidimensionale Strukturen auf. Dies ist zum Beispiel durch einen gewellten oder zickzack-förmigen Wärmeleitkörper 2 gegeben.

In einem weiteren Ausführungsbeispiel, das eine Variante des zuvor beschriebenen Ausführungsbeispiels ist, weist das Gebäudepaneel 70 eine Vorsatzwand 75 auf. Vorzugsweise ist diese Vorsatzwand 75 aus Gipskarton ausgebildet. Sie kann aber auch aus einem luftdurchlässigen Stoff, der über einen Rahmen gespannt ist, bestehen. Damit die Raumluft an den Wärmeleitkörper 2 gelangt, befinden sich vorzugsweise 2 Schlitze oben und unten an der vorgesetzten Wand 75, welche in bekannter Weise mit dem Gebäude verbunden ist.

Um die Raumluft zu entfeuchten, wird die Kontaktoberfläche auf eine Temperatur unter dem Taupunkt des Wasserdampfes in der umgebenden Luft gekühlt, indem das Kühlmittel eine entsprechende Temperatur aufweist. Dabei ist darauf zu achten, dass der Taupunkt von der relativen Luftfeuchtigkeit und der Temperatur der Luft abhängig ist. In einem Ausführungsbeispiel wird die Luft durch die Luftschlitze zwischen die Vorsatzwand und dem Wärmeleitkörper 2 durch Konvektionsströme in der Luft geleitet. Der Wasserdampf in der Luft kondensiert dann an der Oberfläche 10 des Wärmeleitkörpers 2. Ist genügend Wasser kondensiert, so bilden sich Wassertropfen, die ab einer bestimmten Größe herunterlaufen und so noch mehr Wasser mitnehmen. Staubteilchen, Bakterien und Pilzsporen werden dabei von den Wassertropfen mitgenommen. Das Wasser sammelt sich anschließend in einer Auffangvorrichtung 73. Durch den Verlauf der Wassertropfen auf der Oberfläche wird zusätzlich die Temperatur des Wärmeleitkörpers 2 verteilt. Das Wasser in der Auffangvorrichtung 73 fließt anschließend in einen Auffangbehälter 74 ab und von dort in den Wasserabfluss des Gebäudes.

Die Erfindung kann folgendermaßen kurz zusammengefasst werden: Ein Wärmetauscherelement (1) weist einen wärmeleitenden Wärmeleitkörper (2) sowie eine Wärmeträgerfluidleitung (8), die mit dem Wärmeleitkörper (2) wärmeleitend verbunden ist, auf, wobei die Wärmeträgerfluidleitung (8) abschnittweise in vorzugsweise parallel angeordneten Kanälen (5) aus wärmeleitendem Werkstoff in wärmeleitendem Kontakt eingebettet sind, wobei die Kanäle (5) einen rinnenförmigen Aufnahmeabschnitt (7) und zwei an den Aufnahmeabschnitt (7) angebundene Laschen (6) aufweisen, so dass die Kanäle (5) im Querschnitt etwa Ω-förmig ausgebildet sind, und wobei die Laschen (6) flächig mit dem Wärmeleitkörper (2) verbunden sind, um die wärmeleitende Verbindung der Wärmeträgerfluidleitung (8) mit dem Wärmeleitkörper (2) herzustellen. Ein Verfahren zum Herstellen des Wärmetauscherelements (1) wird angegeben. Ferner werden ein Gebäudepaneel und ein Verfahren zum Entfeuchten von Luft angegeben.

### Bezugszeichenliste

- 1: Wärmetauscherelement
- 2: Wärmeleitkörper
- 3: Beschichtung
- 4: Klebstoff
- 5: Kanal
- 6: Lasche
- 7: Aufnahmeabschnitt
- 8: Wärmeträgerfluidleitung
- 9: Innenraum (Fluid)
- 10: Wärmekontaktfläche
- 11: konvektiver Wärmefluss
- 12: leitender Wärmefluss
- 13: emissiver Wärmefluss
- 14: Wärmeübergangsfläche
- 15: Montagefläche
- 20: Folie
- 21: Perforation
- 22: Schablone
- 23: Nut
- 24: Stempel
- 25: Vorsprung
- 26: Pressrichtung
- 27: Gleitrichtung
- 28: Einpressrichtung
- 29: Trägerbauteil
- 30: Pressrichtung
- 31: Wärmefluss
- 40: Pressrichtung
- 41: Lochung
- 42: Wärmefluss
- 50: Pressrichtung
- 60: Perforation
- 70: Gebäudepaneel
- 71: Randverbund
- 72: thermisch aktivierte Fläche
- 73: Auffangvorrichtung
- 74: Auffangbehälter
- 75: Vorsatzwand
- 100: Vorlaufanschlussabschnitt
- 101: Rücklaufanschlussabschnitt
- 102: gerader Abschnitt
- 103: Umkehr-/Verbinderabschnitt
- 104: Wärmeträger-Vorlauf
- 105: Wärmeträger-Rücklauf
- 110: Vorlaufverteilerabschnitt
- 111: Rücklaufverteilerabschnitt

- d: Außendurchmesser Wärmeträgerfluidleitung
- t2: Wandstärke Wärmeleitkörper
- t5: Wandstärke Kanal
- t8: Wandstärke Wärmeträgerfluidleitung
- w: Mündungsweite Kanal

- S1: Raumwarme und feuchte Luft kommt in Kontakt mit der gekühlten Oberfläche und fällt am Element hinab.
- S2: Die Luft kühlt bis unter die Taupunkttemperatur ab.
- S3: Aufnahme von Strahlungswärme
- S4: Die gekühlte Luft strömt in den Raum und das Kondensat wird abgeführt.

## Patentansprüche

1. Wärmetauscherelement (1) für Gebäudepaneele mit
einem wärmeleitenden Wärmeleitkörper (2), welcher als flexible Folie aus Kupfer oder Aluminium oder einer Legierung daraus ausgebildet ist, und welcher eine Wandstärke im Bereich von etwa 10 µm bis zu etwa 100 µm aufweist, sowie mit
einer Wärmeträgerfluidleitung (8), welche aus einem Kapillarrohr aus Kunststoff ausgebildet ist, welches einen Innendurchmesser von etwa 2,5 mm bis 3 mm aufweist,
wobei die Wärmeträgerfluidleitung (8) mit dem Wärmeleitkörper (2) wärmeleitend verbunden ist,
wobei die Wärmeträgerfluidleitung (8) abschnittweise in vorzugsweise parallel angeordneten Kanälen (5) aus wärmeleitendem Werkstoff in wärmeleitendem Kontakt eingebettet ist,
wobei die Kanäle (5) einen rinnenförmigen Aufnahmeabschnitt (7) und zwei an den Aufnahmeabschnitt (7) angebundene Laschen (6) aufweisen, so dass die Kanäle (5) im Querschnitt etwa Ω-förmig ausgebildet sind,
wobei die Laschen (6) flächig mit dem Wärmeleitkörper (2) verbunden sind, um die wärmeleitende Verbindung der Wärmeträgerfluidleitung (8) mit dem Wärmeleitkörper (2) herzustellen, und
wobei der Abstand von Abschnitten der Wärmeträgerfluidleitung (8) 1-5 cm beträgt.

2. Wärmetauscherelement (1) gemäß Anspruch 1, wobei der Wärmeleitkörper (2) eine Wärmeübergangsfläche (14), die eine Hauptfläche des Wärmeleitkörpers (2) ist und zum Wärmeaustausch mit einer Umgebung ausgebildet ist, und eine Montagefläche (15), die eine Hauptfläche des Wärmeleitkörpers (2) ist, aufweist, wobei die Laschen (6) mit der Montagefläche (15) verbunden sind, wobei die Montagefläche (15) vorzugsweise von der Wärmeübergangsfläche (14) weg weist.

3. Wärmetauscherelement (1) gemäß Anspruch 2, wobei die Wärmeträgerfluidleitung (8) gerade Abschnitte (102) aufweist, welche an einem Ende jeweils mit einem Vorlaufverteilerabschnitt (110) und an einem anderen Ende mit einem Rücklaufverteilerabschnitt (111) verbunden sind.

4. Wärmetauscherelement (1) gemäß einem der vorstehenden Ansprüche, wobei eine Innenkontur der Kanäle (5) an eine Außenkontur der Wärmeträgerfluidleitung (8) angepasst ist und eine Mündungsweite (w) der Kanäle (5) im Querschnitt kleiner als eine Außenabmessung (d) der Wärmeträgerfluidleitung (8) im Querschnitt ist.

5. Wärmetauscherelement (1) gemäß einem der vorstehenden Ansprüche, wobei die Laschen (6) der Kanäle (5) über einen wärmeleitenden Klebstoff (4) oder ein wärmeleitendes Haftmittel mit dem Wärmeleitkörper (2) verbunden sind.

6. Wärmetauscherelement (1) gemäß einem der vorstehenden Ansprüche, wobei die Kanäle (5) durch Pressfügen oder umformendes Fügen mit dem Wärmeleitkörper (2) verbunden sind.

7. Wärmetauscherelement (1) gemäß einem der vorstehenden Ansprüche, wobei die Kanäle (5), insbesondere die Aufnahmeabschnitte der Kanäle (5), in einem Trägerbauteil (29) mit Nuten (23), die an eine Außenkontur der Kanäle (5) angepasst sind, eingebettet sind.

8. Wärmetauscherelement (1) gemäß Anspruch 7, wobei das Trägerbauteil (29) eine Dämmplatte ist.

9. Wärmetauscherelement (1) gemäß einem der vorstehenden Ansprüche, wobei die Kanäle (5) eine Wandstärke (t5) von wenigstens etwa 10 µm und von höchstens etwa 100 µm, vorzugsweise wenigstens etwa 15 µm und höchstens etwa 50 µm aufweist, und/oder wobei der Wärmeleitkörper (2) eine Wandstärke (t2) von vorzugsweise wenigstens etwa 15 µm und höchstens etwa 50 µm aufweist, und/oder wobei die Kanäle (5) eine Wandstärke (t5) von wenigstens etwa 0,5 mm und von höchstens etwa 5 mm, vorzugsweise wenigstens etwa 0,8 und höchstens etwa 1 bis 2 mm aufweisen.

10. Wärmetauscherelement (1) gemäß einem der vorstehenden Ansprüche, wobei der Wärmeleitkörper (2) auf der Wärmeübergangsfläche (14) eine wärmeemissionsoptimierte und/oder wärmeabsorptionsoptimierte Beschichtung (3) aufweist.

11. Wärmetauscherelement (1) gemäß einem der vorstehenden Ansprüche, wobei der Wärmeleitkörper (2) eine Perforation oder Aufrauung aufweist.

12. Wärmetauscherelement (1) gemäß einem der vorstehenden Ansprüche, wobei der Wärmeleitkörper (2) auf der Wärmeübergangsfläche (14) eine Beschichtung (3) mit einem ad- oder absorptiven Material aufweist, und/oder wobei der Wärmeleitkörper (2) auf der Wärmeübergangsfläche (14) eine Beschichtung (3) zum Schutz gegen physikalische oder chemische Umwelteinflüsse aufweist.

13. Wärmetauscherelement (1) gemäß einem der vorstehenden Ansprüche, wobei der Wärmeleitkörper (2) wenigstens teilweise durchlässig für Luft oder Gas oder Feuchtigkeit ist, vorzugsweise durch eine gitterartige oder wabenartige oder gelochte oder perforierte Struktur des Wärmeleitkörpers (2).

14. Wärmetauscherelement (1) gemäß einem der vorstehenden Ansprüche, wobei die Kanäle (5) aus Aluminium oder Kupfer oder einer Legierung oder einer Materialzusammensetzung damit ausgebildet ist.

15. Verfahren zum Herstellen eines Wärmetauscherelements (1) mit einem wärmeleitenden Wärmeleitkörper (2), welches eine Wärmeübergangsfläche (14) aufweist, und einer Wärmeträgerfluidleitung (8), die mit dem Wärmeleitkörper (2) wärmeleitend verbunden ist, wobei das Wärmetauscherelement (1) nach einem der vorstehenden Ansprüche ausgebildet ist, wobei das Verfahren aufweist:
- Anordnen einer wärmeleitenden Folie (20) auf einer Nuten (23) aufweisenden Schablone (22) derart, dass die Nuten (23) durch die Folie (20) abgedeckt sind;
- Verwenden von Folienstreifen, mit welchen jeweils eine Nut abgedeckt wird, als die Folie (20), oder Ausbilden von Folienstreifen, welche jeweils eine Nut abdecken, aus der Folie (20);
- Eindrücken der Folienstreifen in die jeweilige Nut, wobei die Folienstreifen so breit sind, dass sie nach dem Eindrücken jeweils einen rinnenförmig in die Nuten (23) eingedrückten Abschnitt (7) sowie seitlich an den Längsrändern der Nuten (23) vorstehende Laschen (6) ausbilden;
- Einsetzen von Abschnitten einer Wärmeträgerfluidleitung (8) in die in den Nuten (23) eingedrückten rinnenförmigen Abschnitte (7) der Folienstreifen; und
- Verbinden der Laschen (6) flächig mit einem wärmeleitenden Wärmeleitkörper (2), wobei die Folienstreifen beim Eindrücken in die Nuten (23) ausgebildet werden, indem die Folie (20) an vordefinierten Stellen längs zwischen den Nuten (23) reißt, wobei die vordefinierten Stellen vorzugsweise durch eine Schwächung, insbesondere Perforation (21), verwirklicht sind, die vor Anordnen der Folie (20) auf der Schablone (22) in der Folie (20) hergestellt wird, oder die Folienstreifen in der auf der Schablone (22) angeordneten Folie (20) durch ein Schneidwerkzeug, das vorzugsweise in einem Presswerkzeug (24) zum Eindrücken der Folienstreifen in die Nuten (23) integriert ist, ausgebildet werden.

## Claims

1. A heat exchange element (1) for building panels, comprising
a thermally conductive heat conducting body (2), which is formed as a flexible foil made of copper or aluminum or an alloy thereof, and which has a wall thickness in the range from about 10 µm to about 100 µm, and comprising
a heat transfer fluid line (8), which is formed from a capillary tube which is made of plastics and has an internal diameter in the range from about 2.5 mm to 3 mm,
the heat transfer fluid line (8) being connected to the heat conducting body (2) in a thermally conductive manner,
the heat transfer fluid line (8) being embedded in thermally conductive contact in sections in preferably parallelly arranged channels (5) made of thermally conductive material,
the channels (5) having a groove-shaped receiving portion (7) and two tabs (6) linked to the receiving portion (7), so that the channels (5) are approximately Ω-shaped in cross-section,
the tabs (6) being connected across large areas to the heat conducting body (2) in order to establish the thermally conductive connection of the heat transfer fluid line (8) to the heat conducting body (2), and
the distance between portions of the heat transfer fluid line (8) being 1-5 cm.

2. The heat exchange element (1) according to claim 1, wherein the heat conducting body (2) comprises a heat transfer surface (14), which is a main surface of the heat conducting body (2) and is designed for heat exchange with the environment, and a mounting surface (15), which is a main surface of the heat conducting body (2), the tabs (6) being connected to the mounting surface (15) which preferably faces away from the heat transfer surface (14).

3. The heat exchange element (1) according to claim 2, wherein the heat transfer fluid line (8) comprises straight portions (102), which are each connected at one end to a supply manifold portion (110) and at another end to a return manifold portion (111).

4. The heat exchange element (1) according to any one of the preceding claims, wherein an inner contour of the channels (5) is adapted to an outer contour of the heat transfer fluid line (8) and an orifice width (w) of the channels (5) in cross-section is smaller than an outer dimension (d) of the heat transfer fluid line (8) in cross-section.

5. The heat exchange element (1) according to any one of the preceding claims, wherein the tabs (6) of the channels (5) are connected to the heat conducting body (2) by means of a thermally conductive adhesive (4) or a thermally conductive bonding agent.

6. The heat exchange element (1) according to any one of the preceding claims, wherein the channels (5) are connected to the heat conducting body (2) by a press-supported joining process or a deformation-based joining process.

7. The heat exchange element (1) according to any one of the preceding claims, wherein the channels (5), in particular the receiving portions of the channels (5), are embedded in a support component (29) having grooves (23) which are adapted to an outer contour of the channels (5).

8. The heat exchange element (1) according to claim 7, wherein the support component (29) is an insulating plate.

9. The heat exchange element (1) according to any one of the preceding claims, wherein the channels (5) have a wall thickness (t5) of at least about 10 µm and of at most about 100 µm, preferably at least about 15 µm and at most about 50 µm, and/or wherein the heat conducting body (2) has a wall thickness (t2) of preferably at least about 15 µm and at most about 50 µm, and/or wherein the channels (5) have a wall thickness (t5) of at least about 0.5 mm and of at most about 5 mm, preferably at least about 0.8 mm and at most about 1 to 2 mm.

10. The heat exchange element (1) according to any one of the preceding claims, wherein the heat conducting body (2) comprises a heat-emission-optimized and/or heat-absorption-optimized coating (3) on the heat transfer surface (14).

11. The heat exchange element (1) according to any one of the preceding claims, wherein the heat conducting body (2) comprises a perforation or roughening.

12. The heat exchange element (1) according to any one of the preceding claims, wherein the heat conducting body (2) comprises a coating (3) with an adsorptive or absorptive material on the heat transfer surface (14), and/or wherein the heat conducting body (2) comprises a coating (3) on the heat transfer surface (14) for protection against physical or chemical environmental influences.

13. The heat exchange element (1) according to any one of the preceding claims, wherein the heat conducting body (2) is at least partially permeable to air or gas or moisture, preferably by means of a grid-like or honeycomb-like or punched or perforated structure of the heat conducting body (2).

14. The heat exchange element (1) according to any of the preceding claims, wherein the channels (5) are formed of aluminum or copper or an alloy or a material composition thereof.

15. A method of manufacturing a heat exchange element (1) comprising a thermally conductive heat conducting body (2) having a heat transfer surface (14), and a heat transfer fluid line (8) connected to the heat conducting body (2) in a thermally conductive manner, wherein the heat exchange element (1) is designed according to any one of the preceding claims, the method comprising:
- arranging a thermally conductive foil (20) on a template (22) with grooves (23) in such a way that the grooves (23) are covered by the foil (20);
- using foil strips, each of which covering a groove, as the foil (20), or forming foil strips, each of which covering a groove, from the foil (20);
- pressing the foil strips into the respective groove, the foil strips being so wide that, when they are pressed in place, they each form a portion (7) pressed into the grooves (23) in the form of a channel and tabs (6) which project laterally at the longitudinal edges of the grooves (23);
- inserting portions of a heat transfer fluid line (8) into the groove-shaped portions (7) of the foil strips that have been pressed into the grooves (23); and
- connecting the tabs (6) across large areas to a thermally conductive heat-conducting body (2), the foil strips being formed when they are pressed into the grooves (23) by the foil (20) tearing longitudinally between the grooves (23) at predefined points, the predefined points preferably being realized by a weakening, in particular a perforation (21), which is produced in the foil (20) before the foil (20) is arranged on the template (22), or the foil strips are formed in the foil (20) arranged on the template (22) by means of a cutting tool which is preferably integrated in a pressing tool (24) for pressing the foil strips into the grooves (23).

## Revendications

1. Élément d'échange de chaleur (1) pour panneaux de construction, comprenant
un corps conducteur de chaleur (2), formé d'une feuille flexible en cuivre ou en aluminium ou en un de leurs alliages, dont l'épaisseur de paroi est comprise entre environ 10 µm et environ 100 µm, et comprenant
une conduite de fluide caloporteur (8), constituée d'un tube capillaire en plastique dont le diamètre interne est compris entre environ 2,5 mm et environ 3 mm,
la conduite de fluide caloporteur (8) étant connectée au corps conducteur de chaleur (2) de manière thermiquement conductrice,
la conduite de fluide caloporteur (8) étant encastrée dans un contact thermoconducteur par sections dans des canaux (5) de préférence disposés parallèlement et constitués d'un matériau thermoconducteur,
les canaux (5) comprenant une section réceptrice (7) en forme de rainure et deux languettes (6) connectées à la section réceptrice (7), de sorte que les canaux (5) ont approximativement une section transversale en forme de Ω,
les languettes (6) étant connectées sur de grandes surfaces au corps conducteur de chaleur (2) afin d'établir la connexion thermoconductrice de la conduite de fluide caloporteur (8) au corps conducteur de chaleur (2), et
la distance entre des sections de la conduite de fluide caloporteur (8) étant comprise entre 1 et 5 cm.

2. L'élément d'échange de chaleur (1) selon la revendication 1, sachant que le corps conducteur de chaleur (2) comprend une surface de transfert de chaleur (14), qui est une surface principale du corps conducteur de chaleur (2) et qui est conçue pour l'échange de chaleur avec l'environnement, et une surface de montage (15), qui est une surface principale du corps conducteur de chaleur (2), les languettes (6) étant connectées à la surface de montage (15) qui est de préférence orientée à l'opposé de la surface de transfert de chaleur (14).

3. L'élément d'échange de chaleur (1) selon la revendication 2, sachant que la conduite de fluide caloporteur (8) comprend des sections droites (102), qui sont chacune connectées à une extrémité à une section de collecteur d'alimentation (110) et à une autre extrémité à une section de collecteur de retour (111).

4. L'élément d'échange de chaleur (1) selon l'une quelconque des revendications précédentes, sachant qu'un contour intérieur des canaux (5) est adapté à un contour extérieur de la conduite de fluide caloporteur (8) et une largeur d'orifice (w) des canaux (5) en section transversale est inférieure à une dimension extérieure (d) de la conduite de fluide caloporteur (8) en section transversale.

5. L'élément d'échange de chaleur (1) selon l'une quelconque des revendications précédentes, sachant que les languettes (6) des canaux (5) sont connectées au corps conducteur de chaleur (2) au moyen d'un adhésif thermoconducteur (4) ou d'un agent de liant thermoconducteur.

6. L'élément d'échange de chaleur (1) selon l'une quelconque des revendications précédentes, sachant que les canaux (5) sont connectés au corps conducteur de chaleur (2) par un processus d'assemblage appuyé par une presse ou par un processus d'assemblage basé sur la déformation.

7. L'élément d'échange de chaleur (1) selon l'une quelconque des revendications précédentes, sachant que les canaux (5), en particulier les sections réceptrices des canaux (5), sont encastrés dans un composant de support (29) comportant des rainures (23) adaptées à un contour extérieur des canaux (5).

8. L'élément d'échange de chaleur (1) selon la revendication 7, sachant que le composant de support (29) est une plaque isolante.

9. L'élément d'échange de chaleur (1) selon l'une quelconque des revendications précédentes, sachant que les canaux (5) ont une épaisseur de paroi (t5) d'au moins environ 10 µm et d'au plus environ 100 µm, de préférence d'au moins environ 15 µm et d'au plus environ 50 µm, et/ou sachant que le corps conducteur de chaleur (2) a une épaisseur de paroi (t2) de préférence d'au moins environ 15 µm et d'au plus environ 50 µm, et/ou sachant que les canaux (5) ont une épaisseur de paroi (t5) d'au moins environ 0.5 mm et d'au plus environ 5 mm, de préférence d'au moins environ 0,8 mm et d'au plus environ 1 à 2 mm.

10. L'élément d'échange de chaleur (1) selon l'une quelconque des revendications précédentes, sachant que le corps conducteur de chaleur (2) comprend un revêtement (3) optimisé pour l'émission de chaleur et/ou l'absorption de chaleur sur la surface de transfert de chaleur (14).

11. L'élément d'échange de chaleur (1) selon l'une des revendications précédentes, sachant que le corps conducteur de chaleur (2) comprend une perforation ou une rugosité.

12. L'élément d'échange de chaleur (1) selon l'une quelconque des revendications précédentes, sachant que le corps conducteur de chaleur (2) comprend un revêtement (3) avec un matériau adsorbant ou absorbant sur la surface de transfert de chaleur (14), et/ou sachant que le corps conducteur de chaleur (2) comprend un revêtement (3) pour la protection contre des influences environnementales physiques ou chimiques sur la surface de transfert de chaleur (14).

13. L'élément d'échange de chaleur (1) selon l'une quelconque des revendications précédentes, sachant que le corps conducteur de chaleur (2) est au moins partiellement perméable à l'air, au gaz ou à l'humidité, de préférence au moyen d'une structure du corps conducteur de chaleur (2) en forme de grille ou de nid d'abeille ou poinçonnée ou perforée.

14. L'élément d'échange de chaleur (1) selon l'une quelconque des revendications précédentes, sachant que les canaux (5) sont formés d'aluminium ou de cuivre ou d'un alliage ou d'une composition de matériaux de ceux-ci.

15. Procédé de fabrication d'un élément d'échange de chaleur (1) comprenant un corps conducteur de chaleur (2) ayant une surface de transfert de chaleur (14), et une conduite de fluide caloporteur (8) connectée au corps conducteur de chaleur (2) d'une manière thermoconductrice, sachant que l'élément d'échange de chaleur (1) est conçu selon l'une quelconque des revendications précédentes, le procédé comprenant :
- disposer une feuille thermoconductrice (20) sur un gabarit (22) comportant des rainures (23) de manière à ce que les rainures (23) soient recouvertes par la feuille (20) ;
- utiliser comme feuille (20) des bandes de feuille couvrant chacune une rainure, ou former des bandes de feuille couvrant chacune une rainure à partir de la feuille (20) ;
- presser les bandes de feuilles dans les rainures respectives, les bandes de feuilles étant si larges que, lorsqu'elles sont pressées en place, elles forment chacune une section (7) pressée dans les rainures (23) sous la forme d'un canal et de languettes (6) qui font saillie latéralement sur les bords longitudinaux des rainures (23) ;
- insérer des sections d'une conduite de fluide caloporteur (8) dans les sections en forme d'un canal (7) des bandes de feuilles qui ont été pressées dans les rainures (23) ; et
- connecter les languettes (6) sur de grandes surfaces à un corps conducteur de chaleur thermoconducteur (2), les bandes de feuille étant formées lorsqu'elles sont pressées dans les rainures (23) en déchirant la feuille (20) longitudinalement entre les rainures (23) à des points prédéfinis, les points prédéfinis étant de préférence réalisés par un affaiblissement, en particulier une perforation (21), qui est produite dans la feuille (20) avant que la feuille (20) ne soit disposée sur le gabarit (22), ou les bandes de feuille sont formées dans la feuille (20) disposée sur le gabarit (22) au moyen d'un outil de coupe qui est de préférence intégré dans un outil de pressage (24) pour presser les bandes de feuille dans les rainures (23).
